# EUROPEAN PATENT APPLICATION

(11) **EP 2 796 419 A1**
(43) Date of publication of application: **29.10.2014**
(21) Application number: 12859439.7
(22) Date of filing: 09.10.2012
(51) Int. Cl.: C02F 11/10

(54) **OPERATION LOGIC OF AN ORGANIC MATERIAL THERMOHYDROLYSIS SYSTEM**

(30) Priority: 21.12.2011 KR 20110138957; 05.04.2012 KR 20120035246
(71) Applicant: Kang, Seok-Woong, Anyang-si, Gyeonggi-do431-088 (KR)
(72) Inventor: Kang, Seok-Woong, Anyang-si, Gyeonggi-do431-088 (KR)
(74) Representative: Gulde & Partner
(86) International application number: PCT/KR2012/008167
(87) International publication number: WO 2013/094859

(57) **Abstract**

Disclosed is an operating logic of an organic material thermal hydrolysis system. One or at least two reactors are used and controlled according to a control program based on an operating logic stored in a PLC or a micro-computer to improve digestion efficiency and to minimize an amount of a sludge dehydrated cake in a dehydration process after the digestion process has been performed. Waste heat generated from a reactor is used to preheat the conditioning tank to save operating energy, and continuously generated waste heat is continuously used.

## Description

### [Technical Field]

The present invention relates to an operating logic of an organic material thermal hydrolysis system, in which, for controlling the organic material thermal hydrolysis system according to a control program based on an operating logic stored in a PLC or a micro-computer to improve digestion efficiency and to minimize an amount of a sludge dehydrated cake in a dehydration process after the digestion process has been performed, for using waste heat generated from a reactor to preheat the conditioning tank to save operating energy, and for efficiently using the organic material thermal hydrolysis by efficiently using the waste heat continuously generated in a combined heat and power generation procedure, at least two reactors are installed in parallel between the conditioning tank and the lysis tank, and a control operation is performed according to the control program based on the operating logic stored in the PLC or the micro-computer, thereby improving digestion efficiency and minimizing an amount of a sludge dehydrated cake in a dehydration process after the digestion process has been performed, and the waste heat generated from the reactor is used to preheat the conditioning tank, thereby saving the operating energy.

### [Background Art]

Since an operating logic for an organic material thermal hydrolysis system of the related art makes a worker operate the organic material thermal hydrolysis system manually or based on the operating experience of the worker without rules that are specifically set and stored, the organic material thermal hydrolysis system does not efficiently open and close a pump and a valve in cooperation with various sensors, so that the working time of the worker may be significantly required, and digestion efficiency may be degraded.

In addition, since wasted energy generated from a reactor that thermally hydrolyzes sludge is not efficiently used, energy may be excessively applied for the operating of the reactor.

Further, since a digestion process is not effectively performed, a great amount of dehydrated cakes may be produced when the sludge is dehydrated after the digestion process has been finished.

In addition, waste heat continuously generated from a combined heat and power generation device is not efficiently used, so that the waste heat may be dissipated. Especially, an organic material thermal hydrolysis system required to treat sludge is not efficiently used in the linkage with the combined heat and power generation device.

### [Disclosure]

### [Technical Problem]

An object of the present invention is to significantly save energy required for the operation since heat is introduced in a reactor for a thermal hydrolysis reaction and a conditioning tank is preheated by using remaining heat and pressure after the thermal hydrolysis reaction.

Another object of the present invention is to reduce time for sludge digestion treatment and to efficiently perform digestion by installing and automatically controlling a plurality of operating logic programs designed according to the present invention by using a programmable logic controller (PLC) or a micro-computer when operating a thermal hydrolysis system for an organic material contained in sludge.

Still another object of the present invention is to efficiently perform organic material thermal hydrolysis by installing at least two reactors between a conditioning tank and a lysis tank or a flush tank so that waste heat continuously generated from a combined heat and power generation can be used, sequentially and continuously heating the reactors by using waste heat, and maintaining the reactors at a set temperature.

Still another object of the present invention is to reduce the size of reactors as at least two reactors are installed between the conditioning tank and the lysis tank, so that a reaction is more rapidly and efficiently made to reduce a dehydrated cake and to improve the utilization of a tank.

Still another object of the present invention is to significantly save energy required for the operation since sludge is introduced in a reactor and thermally hydrolyzed and a conditioning tank is preheated by using remaining heat and pressure after the thermal hydrolysis reaction.

Still another object of the present invention is to improve digestion efficiency and to minimize the dehydrated cake in a dehydration process after the digestion process has been performed by setting operating times and operating conditions as efficiently as possible.

### [Technical Solution]

In order to accomplish the objects of the present invention, there is provided an operating logic of an organic material thermal hydrolysis system. The operating logic is realized by including a) measuring weight of sludge discharged from a sludge dehydrating facility, operating a sludge feeding pump in the organic material thermal hydrolysis system, transferring a set amount of sludge into a hopper, and stopping the operation of the sludge feeding pump, b) transferring a set amount of sludge from the hopper into a conditioning tank by using a hopper pump, c) heating the reactor to a set temperature by operating a boiler and maintaining a temperature of the reactor at the set temperature and maintaining an internal pressure of the reactor at a set pressure while thermally hydrolyzing the sludge, d) preheating sludge stored in the conditioning tank by transferring steam existing in the reactor into the conditioning tank for the heating of the conditioning tank as a reactor pressure reducing valve is opened for efficient use of high-temperature waste energy existing at an upper portion of the reactor, and simultaneously emptying a lysis tank by operating a lysis tank pump in order to receive sludge subject to a thermal hydrolysis reaction made in the reactor, e) closing the reactor pressure reducing valve and allowing a reactor valve to be opened such that the sludge subject to the thermal hydrolysis reaction is transferred into the lysis tank, and closing the reactor valve, and f) allowing a conditioning tank valve to be opened and operating a conditioning tank pump to transfer a set amount of sludge stored in the conditioning tank into the reactor, stopping the operation of the conditioning tank pump, and closing the conditioning tank valve and by repeatedly performing the above steps.

According to the present invention, there is provided an operating logic of an organic material thermal hydrolysis system. The operating logic is realized by including (a) measuring weight of sludge discharged from a dehydrating facility, operating a sludge feeding pump in the organic material thermal hydrolysis system, transferring a set amount of sludge into a hopper, and stopping the operation of the sludge feeding pump, (b) heating a temperature of a reactor to a set temperature by operating a boiler and maintaining the temperature of the reactor at the set temperature, and maintaining an internal pressure of the reactor at a set value while thermally hydrolyzing sludge, (c) transferring a set amount of sludge from the hopper to a conditioning tank by using a hopper pump when the boiler is operated, (d) preheating sludge stored in the conditioning tank by transferring steam existing in the reactor for the heating of the conditioning tank as a reactor pressure reducing valve is opened for efficient use of high-temperature waste energy existing at an upper portion of the reactor, and simultaneously emptying a lysis tank by operating a lysis tank pump in order to receive sludge subject to a thermal hydrolysis reaction made in the reactor, (e) closing the reactor pressure reducing valve and allowing a reactor valve to be opened such that the sludge subject to the thermal hydrolysis reaction is transferred into the lysis tank, and closing the reactor valve, and (f) allowing a conditioning tank valve to be opened and operating a conditioning tank pump to transfer a set amount of sludge stored in the conditioning tank into the reactor, stopping the operation of the conditioning tank pump, and closing the conditioning tank valve, and by repeatedly performing the above steps.

According to the present invention, there is provided an operating logic of an organic material thermal hydrolysis system. The operating logic is realized by including (a) measuring weight of sludge discharged from a dehydrating facility, operating a sludge feeding pump in the organic material thermal hydrolysis system, transferring a set amount of sludge into a hopper, and stopping the operation of the sludge feeding pump, (b) transferring a set amount of sludge from the hopper into a conditioning tank by using a hopper pump, (c) heating a temperature of a reactor to a set temperature by operating a boiler and maintaining the temperature of the reactor at the set temperature, and maintaining an internal pressure of the reactor at a set value while thermally hydrolyzing sludge, (d) preheating sludge stored in the conditioning tank by transferring steam existing in the reactor for the heating of the conditioning tank as a reactor pressure reducing valve is opened for efficient use of high-temperature waste energy existing at an upper portion of the reactor, and closing the reactor pressure reducing valve, (e) emptying a lysis tank by operating a lysis tank pump in order to receive sludge subject to a thermal hydrolysis reaction made in the reactor, (f) allowing a reactor valve to be opened to transfer the sludge subject to the thermal hydrolysis reaction into the lysis tank and closing the reactor valve, and (g) allowing a conditioning tank valve to be opened and operating a conditioning tank pump in order to transfer the sludge stored in the conditioning tank into the reactor, so that a set amount of sludge is transferred, stopping the operation of the conditioning tank pump, and closing the conditioning tank valve, and by repeatedly performing the above steps.

According to the present invention, there is provided an operating logic of an organic material thermal hydrolysis system. The operating logic is realized by including a) measuring weight of sludge discharged from a sludge dehydrating facility, operating a sludge feeding pump in the organic material thermal hydrolysis system, transferring a set amount of sludge into a hopper, and stopping the operation of the sludge feeding pump, b) transferring a set amount of sludge from the hopper into a conditioning tank by using a hopper pump, c) heating the reactor to a set temperature by allowing a steam feeding valve to be opened, maintaining a temperature of the reactor at the set temperature by closing the steam feeding valve, and maintaining an internal pressure of the reactor at a set pressure while thermally hydrolyzing the sludge, d) preheating sludge stored in the conditioning tank by transferring steam existing in the reactor into the conditioning tank for the heating of the conditioning tank as a reactor pressure reducing valve is opened for efficient use of high-temperature waste energy existing at an upper portion of the reactor, and simultaneously emptying a lysis tank or a flush tank by operating a lysis tank pump or a flush tank pump in order to receive sludge subject to a thermal hydrolysis reaction made in the reactor, e) closing the reactor pressure reducing valve and allowing a reactor valve to be opened such that the sludge subject to the thermal hydrolysis reaction is transferred into the lysis tank or the flush tank, and closing the reactor valve, and f) allowing a conditioning tank valve to be opened and operating a conditioning tank pump to transfer a set amount of sludge stored in the conditioning tank into the reactor, stopping the operation of the conditioning tank pump, and closing the conditioning tank valve, and by repeatedly performing the above steps. At least two reactors are installed in parallel between the conditioning tank and the lysis tank or the flush tank, sequentially and continuously heated to the set temperature, and maintained at the set temperature so that the steam continuously generated through combined heat and power generation is not cooled, so an efficiency operation is possible.

According to the present invention, there is provided an operating logic of an organic material thermal hydrolysis system. The operating logic is realized by including (a) measuring weight of sludge discharged from a dehydrating facility, operating a sludge feeding pump in the organic material thermal hydrolysis system, transferring a set amount of sludge into a hopper, and stopping the operation of the sludge feeding pump, (b) heating a temperature of a reactor to a set temperature by operating a boiler and maintaining the temperature of the reactor at the set temperature, and maintaining an internal pressure of the reactor at a set value while thermally hydrolyzing sludge, (c) transferring a set amount of sludge from the hopper to a conditioning tank by using a hopper pump when the boiler is operated, (d) preheating sludge stored in the conditioning tank by transferring steam existing in the reactor for the heating of the conditioning tank as a reactor pressure reducing valve is opened for efficient use of high-temperature waste energy existing at an upper portion of the reactor, and simultaneously emptying a lysis tank or a flush tank by operating a lysis tank pump or a flush tank pump in order to receive sludge subject to a thermal hydrolysis reaction made in the reactor, (e) closing the reactor pressure reducing valve and allowing a reactor valve to be opened such that the sludge subject to the thermal hydrolysis reaction is transferred into the lysis tank or the flush tank, and closing the reactor valve, and (f) allowing a conditioning tank valve to be opened and operating a conditioning tank pump to transfer a set amount of sludge stored in the conditioning tank into the reactor, stopping the operation of the conditioning tank pump, and closing the conditioning tank valve, and by repeatedly performing the above steps. At least two reactors are installed in parallel between the conditioning tank and the lysis tank or the flush tank, sequentially and continuously heated to the sequentially set temperature, and maintained at the set temperature so that the steam continuously generated from a combined heat and power generation device is not cooled, so an efficiency operation is possible.

According to the present invention, there is provided an operating logic of an organic material thermal hydrolysis system. The operating logic is realized by including (a) measuring weight of sludge discharged from a dehydrating facility, operating a sludge feeding pump in the organic material thermal hydrolysis system, transferring a set amount of sludge into a hopper, and stopping the operation of the sludge feeding pump, (b) transferring a set amount of sludge from the hopper into a conditioning tank by using a hopper pump, (c) heating a temperature of a reactor to a set temperature by operating a boiler and maintaining the temperature of the reactor at the set temperature, and maintaining an internal pressure of the reactor at a set value while thermally hydrolyzing sludge, (d) preheating sludge stored in the conditioning tank by transferring steam existing in the reactor for the heating of the conditioning tank as a reactor pressure reducing valve is opened for efficient use of high-temperature waste energy existing at an upper portion of the reactor, and closing the reactor pressure reducing valve, (e) emptying a lysis tank or a flush tank by operating a lysis tank pump or a flush tank pump in order to receive sludge subject to a thermal hydrolysis reaction made in the reactor, (f) allowing a reactor valve to be opened to transfer the sludge subject to the thermal hydrolysis reaction into the lysis tank and closing the reactor valve, and (g) allowing a conditioning tank valve to be opened and operating a conditioning tank pump in order to transfer the sludge stored in the conditioning tank into the reactor, so that a set amount of sludge is transferred, stopping the operation of the conditioning tank pump, and closing the conditioning tank valve, and by repeatedly performing the above steps. At least two reactors are installed in parallel between the conditioning tank and the lysis tank or the flush tank, sequentially and continuously heated to the set temperature, and maintained at the sequentially set temperature so that the continuously generated steam is not cooled, so an efficiency operation is possible.

### [Advantageous Effects]

According to the present invention, digestion can be efficiently performed and time for sludge digestion treatment can be reduced by installing and automatically controlling a plurality of operating logic programs designed according to the present invention by using PLC or a micro-computer when operating a thermal hydrolysis system for an organic material contained in sludge.

According to the present invention, energy required for the operation can be significantly saved since heat is introduced in a reactor for a thermal hydrolysis reaction and a conditioning tank is preheated by using remaining heat and pressure after the thermal hydrolysis reaction.

According to the present invention, digestion can be efficiently performed and time for sludge digestion treatment can be reduced by installing and automatically controlling a plurality of operating logic programs designed according to the present invention by using a PLC or a micro-computer when operating a thermal hydrolysis system for an organic material contained in sludge.

According to the present invention, at least two reactors are installed in parallel between a conditioning tank and a lysis tank or a flush tank so that waste heat continuously generated from a combined heat and power generation can be used, so the reactors can be sequentially and continuously perform the thermal hydrolysis process efficiently.

According to the present invention, the size of reactors can be significantly reduced as at least two reactors are installed between the conditioning tank and the lysis tank or the flush tank, so that a reaction is more rapidly and efficiently made to reduce a dehydrated cake and to improve the utilization of a reactor.

According to the present invention, digestion efficiency can be improved and the dehydrated cake can be minimized in a dehydration process after the digestion process has been performed by setting operating times and operating conditions as efficiently as possible.

### [Description of Drawings]

FIG. 1 is a view showing an organic material thermal hydrolysis system to which an operating logic designed according to the present invention is applied.
FIG. 2 is a view showing one embodiment of the operating logic of the organic material thermal hydrolysis system according to the present invention.
FIG. 3 is a view showing another embodiment of the operating logic of the organic material thermal hydrolysis system according to the present invention.
FIG. 4 is a view showing still another embodiment of the operating logic of the organic material thermal hydrolysis system according to the present invention.
FIG. 5 is a view showing an operating logic of a system having at least two reactors between a conditioning tank and a lysis tank, which is designed according to the present invention.
FIGS. 6 to 9 are views showing one embodiment of an operating logic of an organic material thermal hydrolysis system when three reactors are installed in parallel between a conditioning tank and a lysis tank or a flush tank according to the present invention.
FIGS. 10 to 12 are views showing one embodiment of an operating logic of an organic material thermal hydrolysis system when four reactors are installed in parallel between a conditioning tank and a lysis tank or a flush tank according to the present invention.

### [Best Mode]

The best mode according to an embodiment of the present invention is provided as an operating logic of an organic material thermal hydrolysis system, which is realized by including a) measuring weight of sludge discharged from a dehydrating facility, operating a sludge feeding pump in the organic material thermal hydrolysis system, transferring a set amount of sludge into a hopper, and stopping the operation of the sludge feeding pump, b) transferring a set amount of sludge from the hopper into a conditioning tank by using a hopper pump, c) heating the reactor to a set temperature by operating a boiler and maintaining a temperature of the reactor at the set temperature and maintaining an internal pressure of the reactor at a set pressure while thermally hydrolyzing the sludge, d) preheating sludge stored in the conditioning tank by transferring steam existing in the reactor into the conditioning tank for the heating of the conditioning tank as a reactor pressure reducing valve is opened for efficient use of high-temperature waste energy existing at an upper portion of the reactor, and simultaneously emptying a lysis tank by operating a lysis tank pump in order to receive sludge subject to a thermal hydrolysis reaction made in the reactor, e) closing the reactor pressure reducing valve and allowing a reactor valve to be opened such that the sludge subject to the thermal hydrolysis reaction is transferred into the lysis tank, and closing the reactor valve, and f) allowing a conditioning tank valve to be opened and operating a conditioning tank pump to transfer a set amount of sludge stored in the conditioning tank into the reactor, stopping the operation of the conditioning tank pump, and closing the conditioning tank valve and by repeatedly performing the above steps.

The best mode according to another embodiment of the present invention is provided as an operating logic of an organic material thermal hydrolysis system, which is realized by including a) measuring weight of sludge discharged from a sludge dehydrating facility, operating a sludge feeding pump in the organic material thermal hydrolysis system, transferring a set amount of sludge into a hopper, and stopping the operation of the sludge feeding pump, b) transferring a set amount of sludge from the hopper into a conditioning tank by using a hopper pump, c) heating the reactor to a set temperature by allowing a steam feeding valve to be opened, maintaining a temperature of the reactor at the set temperature by closing the steam feeding valve, and maintaining an internal pressure of the reactor at a set pressure while thermally hydrolyzing the sludge, d) preheating sludge stored in the conditioning tank by transferring steam existing in the reactor into the conditioning tank for the heating of the conditioning tank as a reactor pressure reducing valve is opened for efficient use of high-temperature waste energy existing at an upper portion of the reactor, and simultaneously emptying a lysis tank or a flush tank by operating a lysis tank pump or a flush tank pump in order to receive sludge subject to a thermal hydrolysis reaction made in the reactor, e) closing the reactor pressure reducing valve and allowing a reactor valve to be opened such that the sludge subject to the thermal hydrolysis reaction is transferred into the lysis tank or the flush tank, and closing the reactor valve, f) allowing a conditioning tank valve to be opened and operating a conditioning tank pump to transfer a set amount of sludge stored in the conditioning tank into the reactor, stopping the operation of the conditioning tank pump, and closing the conditioning tank valve, and by repeatedly performing the above steps. At least two reactors are installed in parallel between the conditioning tank and the lysis tank or the flush tank, sequentially and continuously heated to the sequentially set temperature, and maintained at the set temperature so that the steam continuously generated through combined heat and power generation is not cooled, so an efficiency operation is possible.

### [Mode for Invention]

Hereinafter, an exemplary embodiment of the present invention will be described with reference to accompanying drawings.

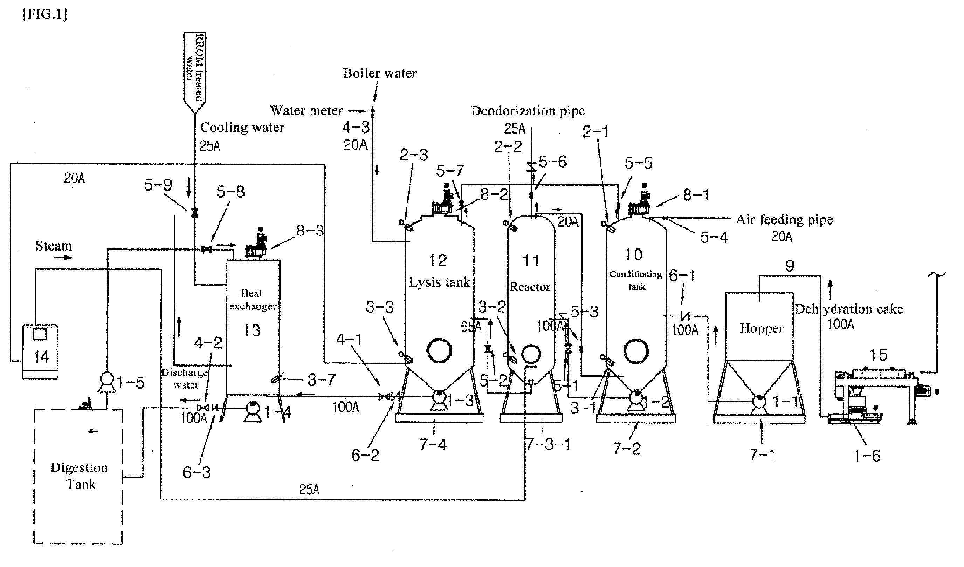

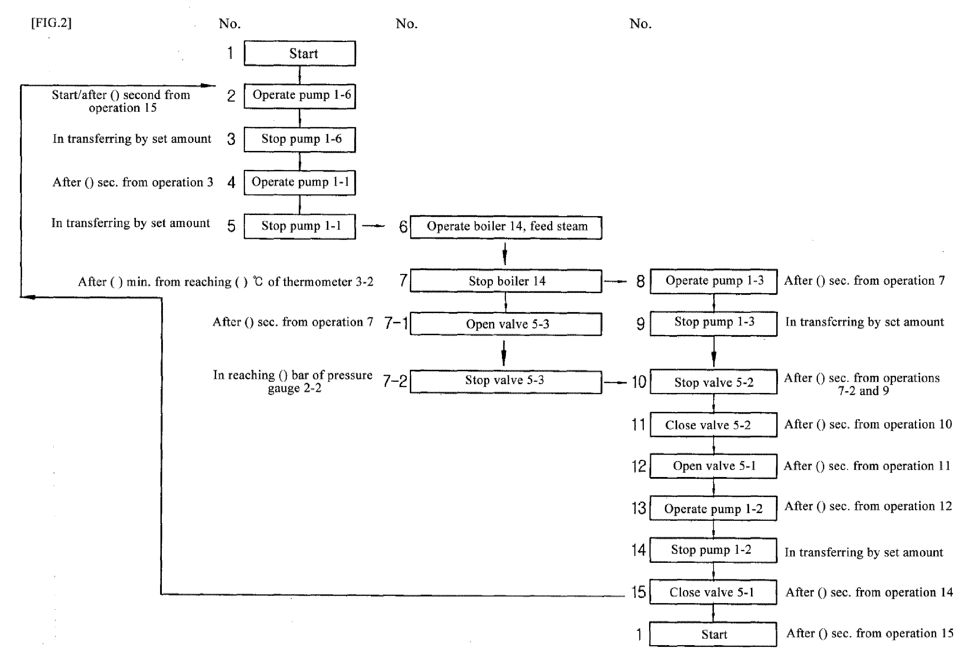

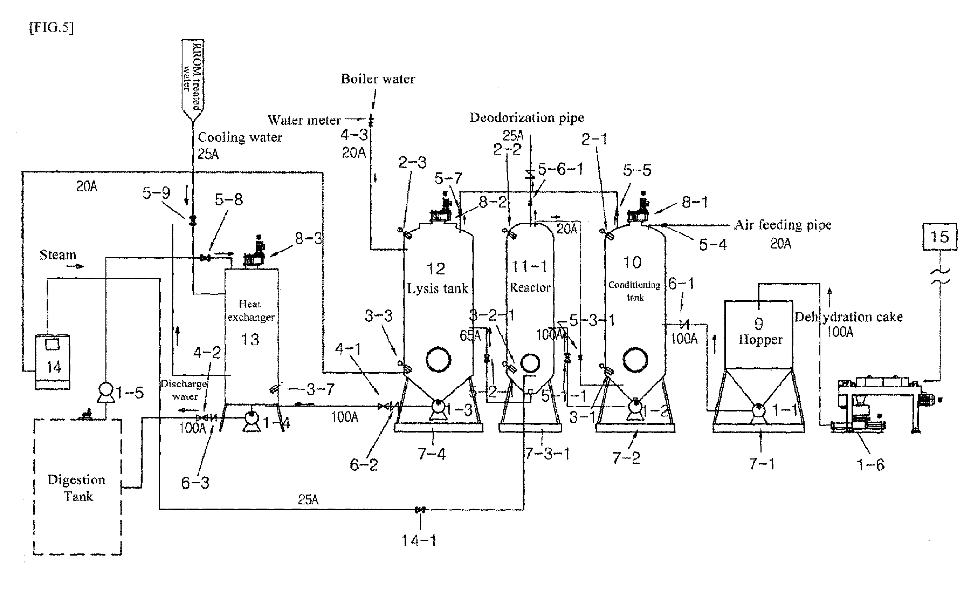

The embodiment of the present invention will be described through the distinguishment between operating logics of an organic material thermal hydrolysis system shown in FIGS. 2 to 4 employing an operating logic shown in FIG. 1, and operating logics of an organic material thermal hydrolysis system shown in FIGS. 2 to 4 employing an operating logic shown in FIG. 5

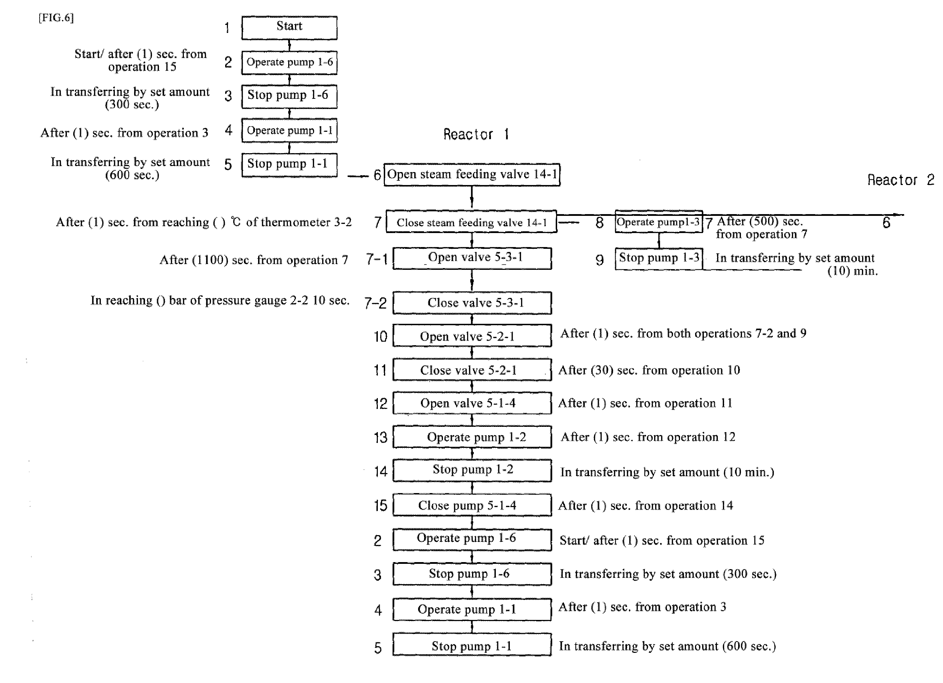

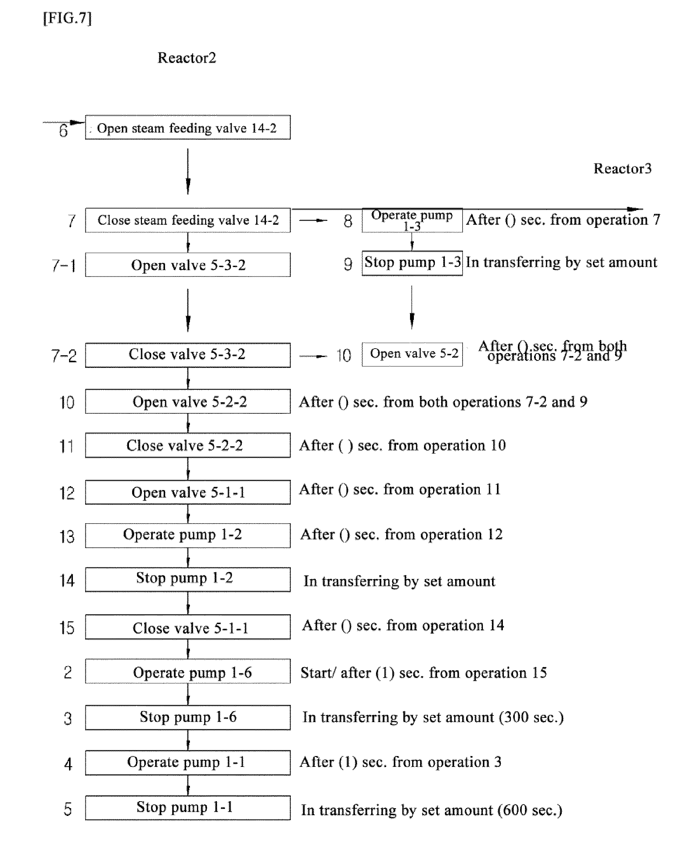

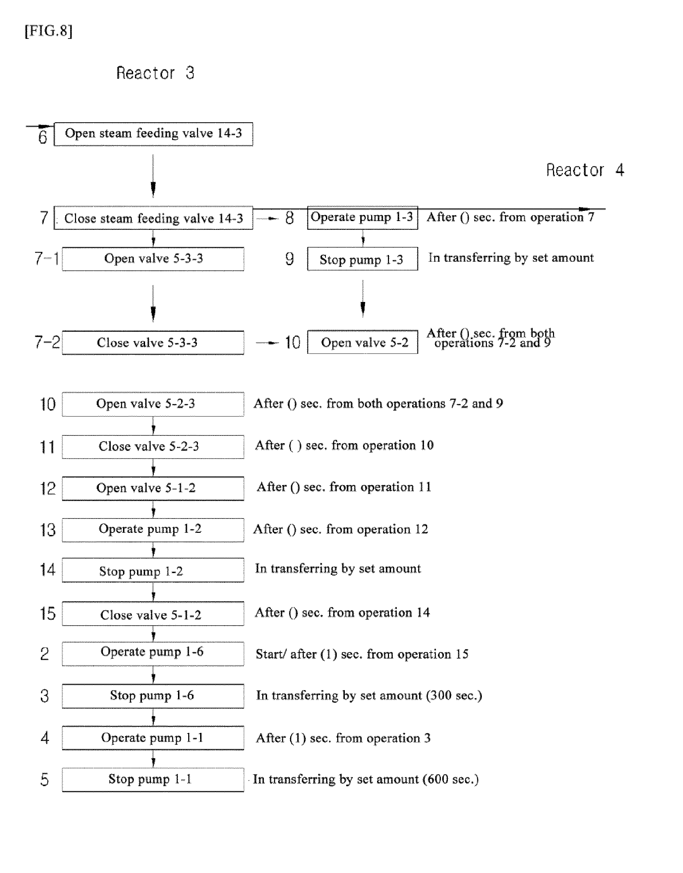

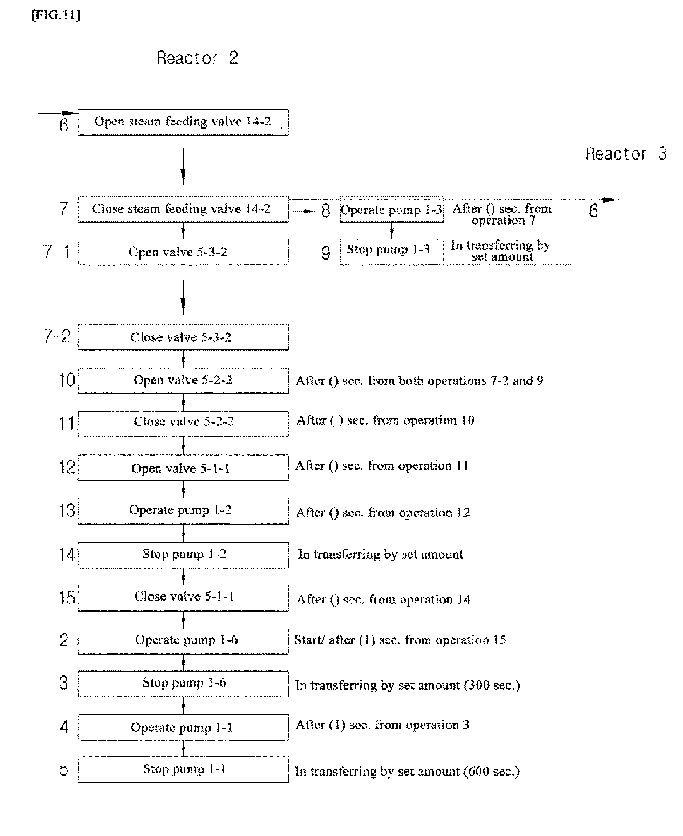

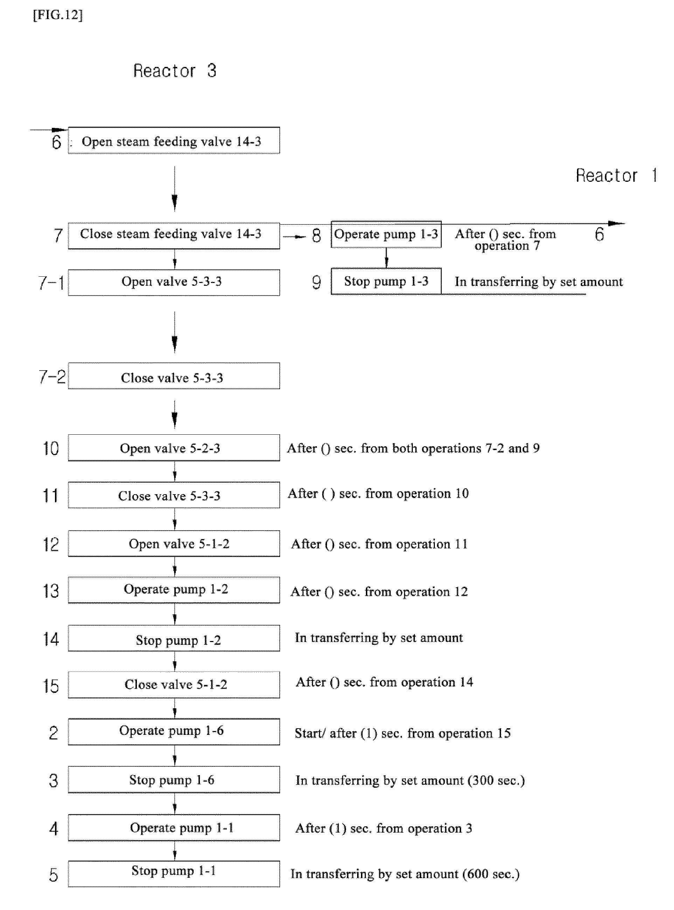

FIGS. 1 to 4 show operating logics when one reactor is installed between a conditioning tank and a lysis tank. FIGS. 6 to 12 show operating logics having the operating logic of FIG. 5 when at least two reactors are installed between the conditioning tank and the lysis tank.

According to the present invention, digestion efficiency of sludge can be improved and the dewaterability after digestion can be improved, so that an amount of sludge can be significantly reduced.

In addition, a control logic based on a PLC or a micro-computer is employed, so that an automatic control operation is performed in each sludge treatment step and tank with times or weight set in a memory, and an operation is performed with the optimal time and weight, thereby efficiently treating the sludge. In addition, the control logic is used to preheat or heat a peripheral device by using waste energy and waste heat generated from the reactor, so that energy efficiency can be improved.

An operating logic to perform a control operation based on the PLC or the micro-computer cooperates with sensors in each step according to time series, so that the operating logic can be performed according to values set in the memory.

Hereinafter, the whole structure for the operating logic of the organic material thermal hydrolysis system according to the present invention by using one reactor will be described with reference to FIGS. 1 to 4.

Sludge is discharged through a hopper, which is used to control the sludge flow, from a sludge storage tank, which temporarily stores the sludge, by using a sludge feeding pump.

In the hopper, the weight of injected sludge is measured by using a load cell mounted under the hopper so that an amount of sludge injected into the hopper is controlled. Preferably, the amount of the injected sludge is set to about 5 times to about 10 times greater than an amount of sludge injected into a reactor for the storage and the maintenance of the injected sludge.

The sludge stored in a hopper 9 is transferred to a conditioning tank 10 through a pipe by using a hopper pump, and, the conditioning tank 10 measures the weight of the injected sludge by a load cell mounted under the conditioning tank 10 to inject sludge by an amount set in the PLC, which is approximately equal to an amount of sludge injected into the reactor. A function rate is preferably maintained in the range of 70% to 90%.

The conditioning tank 10 preheats sludge before injecting the sludge into the reactor so that the sludge is rapidly thermally hydrolyzed when the sludge is injected into the reactor. The preheating temperature of the sludge is preferably maintained in the range of 80 °C to 100 °C.

The preheating by the conditioning tank 10 is performed by using steam heated at an upper portion of the reactor 11.

The preheated sludge is transferred into the reactor through a pipe, and the reactor 11 measures the weight of the sludge, which is continuously injected, by a load cell installed under the reactor 11 to control an amount of the sludge to inject the sludge by an amount set in the PLC or a micro-computer. An amount of the injected sludge is preferably in the range of 25 % to 60 % based on the volume of the reactor 11 for the effective thermal hydrolysis.

Regarding the conditions of the reactor, the temperature of the reactor is set and maintained to a value in the range of 150 °C to 200 °C, and the pressure of the reactor is set and maintained to a value in the range of 6 bar to 12 bar, so that a higher molecule organic material is hydrolyzed into a lower molecule organic material to improve digestion efficiency and minimize an amount of a sludge dehydrated cake. The reaction time of the reactor is preferably in the range of 20 minutes to 60 minutes, which may be changed.

A temperature sensor and a pressure sensor are installed at one side in the reactor to measure the temperature of heat and an internal pressure when the heating is performed by using a boiler, so that the value set in a memory is maintained to efficiently perform a thermal hydrolysis process.

Sludge subject to the thermal hydrolysis reaction in the reactor is transferred to a lysis tank through a pipe. The sludge may be transferred by using the pressure existing in the reactor and by using a transfer pump installed in the reactor. A reactor value is mounted on one side of the pipe.

The lysis tank is configured to retrieve energy injected in the thermal hydrolysis process through the lysis of a cell wall of a hydrolyzed microorganism. The lysis tank is configured to preheat water in the boiler by using waste heat or waste energy.

In order to lower the temperature of the sludge after the lysis of the cell wall of the hydrolyzed microorganism to a temperature sufficient for digestion, the sludge is cooled through a heat exchanger and injected into a digestion tank. The temperature appropriate to the digestion is in the range of 35 °C to 55 °C.

Hereinafter, description will be made regarding the detailed technical structure for the operating logic of the organic material thermal hydrolysis system designed according to the present invention in order to improve the digestion efficiency of the digestion sludge formed by the organic material thermal hydrolysis system and to minimize an amount of the dehydrated cake in a dehydration process after the digestion process has been performed.

### <Embodiment 1>

A first embodiment of the present invention will be described with reference to FIG. 2.

In the organic material thermal hydrolysis system shown in FIG. 1, the weight of injected sludge is measured by a hopper load cell 7-1 installed under a hopper, a sludge feeding pump 1-6 is operated to transfer a set amount of sludge into the hopper through the transfer pipe, and the operation of the sludge feeding pump 1-6 is stopped.

An amount of sludge to be injected into the hopper is measured by the hopper load cell 7-1 installed under the hopper for the transfer of the sludge into the hopper by the amount of the sludge set in the PLC. An amount of sludge to be injected and stored into the hopper is preferably set to an amount five times to 10 times greater than an amount of sludge treated one time in the reactor serving as a core component of the present invention.

Next, in order to transfer the sludge stored in the hopper into the conditioning tank 10 through the transfer pipe connected to the hopper, a hopper valve 6-1 installed at one side of the transfer pipe is opened and the sludge is transferred into the conditioning tank by the set amount of the sludge by using a hopper pump 1-1 and a conditioning tank load cell 7-2, and the operation of the hopper pump is stopped.

The set amount of the sludge is determined by the conditioning tank load cell 7-2, which measures the weight of sludge injected into the conditioning tank. The set amount of the sludge is preferably determined to an amount equal to or approximate to an amount of sludge treated one time in the reactor.

The operation of the reactor is started in the state that an amount of sludge to be treated one time in the reactor has been injected before the organic material thermal hydrolysis system according to the present invention is operated. Accordingly, energy applied in the treatment of the sludge can be saved when the organic material thermal hydrolysis system is operated and the sludge is automatically treated in an initial stage.

Otherwise, a conditioning tank valve 5-1 installed at one side of a pipe connected to the reactor 11 may be opened in order to transfer sludge stored in the conditioning tank into the reactor 11 through the connected pipe by using a conditioning tank pump 1-2. Then, the conditioning tank pump 1-2 may be operated so that the sludge is transferred into the reactor 11 by a set amount. Thereafter, the operation of the conditioning tank pump 1-2 may be stopped, and the conditioning tank valve 5-1 may be closed.

After sludge has been transferred into the conditioning tank by a set amount by using the hopper pump 1-1, the operation of the hopper pump 1-1 is stopped and then a boiler 14 (see FIG. 1) is operated, so that the set temperature of the reactor is maintained in the range of 150 °C to 200 °C, and the internal pressure of the reactor is maintained to a set value in the range of 6 bar to 12 bar, which performs the thermal hydrolysis process.

The time for the thermal hydrolysis process is varied depending on a temperature, a pressure, and an amount of injected sludge, and preferably set in the range of 30 minutes to 60 minutes.

If the thermal hydrolysis process is terminated as a set time is elapsed, an operating logic is performed in which, in order to efficiently use high-temperature waste energy existing at the upper portion of the reactor before the sludge provided in the reactor is transferred into the lysis tank, a reactor pressure reducing valve 5-3 is opened so that internal steam existing in the reactor is transferred to heat the conditioning tank so sludge stored in the conditioning tank is preheated. Simultaneously, an operating logic is performed in which the lysis tank is emptied to a set weight by operating the lysis tank pump 1-3 in order to receive the sludge subject to the thermal hydrolysis reaction made in the reactor.

A unit for emptying the lysis tank 12 may be operated together with the operation of the lysis tank load cell 7-4 installed under the lysis tank 12. In other words, if the weight of the sludge stored in the lysis tank 12 is reduced to reach the set weight as the weight of the sludge stored in the lysis tank 12 is continuously measured, the operation of the lysis tank pump 1-3 may be stopped.

Thereafter, the reactor pressure reducing valve 5-3 is closed, and the reactor valve 5-2 is opened so that the sludge subject to the thermal hydrolysis reaction is transferred into the lysis tank for a set time. Then, the reactor valve 5-2 is closed.

Regarding the set weight of the sludge for the transferring of the sludge into the lysis tank 12, if the weight of the sludge stored in the reactor 11 is reduced to reach the set weight as the weight of the sludge stored in the reactor 11 is continuously measured by using a reactor load cell 7-3 installed under the reactor, the reactor valve 5-2 is automatically closed.

Thereafter, in order to transfer the sludge stored in the conditioning tank 10 into the reactor 11, the conditioning tank valve 5-1 is opened, the conditioning tank pump 1-2 and the conditioning tank load cell 7-2 are operated in cooperation with each other to transfer the sludge stored in the conditioning tank 10 by the set amount, the operation of the conditioning tank pump 1-2 is stopped, and the conditioning tank valve 5-1 is closed.

According to the first embodiment, an operating logic of continuously treating the sludge by repeating the technical steps described above is provided to improve the digestion efficiency and to minimize an amount of the dehydrated cake in a dehydration process after the digestion process has been performed.

Hereinafter, the operating logic according to the first embodiment will be summarized based on the above-described technical constitution. The operating logic of the organic material thermal hydrolysis system is configured to include the steps of a) measuring weight of sludge discharged from the sludge dehydrating facility, operating the sludge feeding pump in the organic material thermal hydrolysis system, transferring a set amount of sludge into the hopper, and stopping the operation of the sludge feeding pump, b) transferring a set amount of sludge from the hopper into the conditioning tank by using the hopper pump, c) heating the reactor to a set temperature by operating the boiler and maintaining the temperature of the reactor at the set temperature and maintaining the internal pressure of the reactor at a set pressure while thermally hydrolyzing the sludge of the reactor, d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and simultaneously emptying the lysis tank by operating the lysis tank pump in order to receive the sludge subject to the thermal hydrolysis reaction made in the reactor, e) closing the reactor pressure reducing valve and allowing the reactor valve to be opened so that the sludge subject to the thermal hydrolysis reaction is transferred into the lysis tank, and closing the reactor valve, and f) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (f).

### <Embodiment 2>

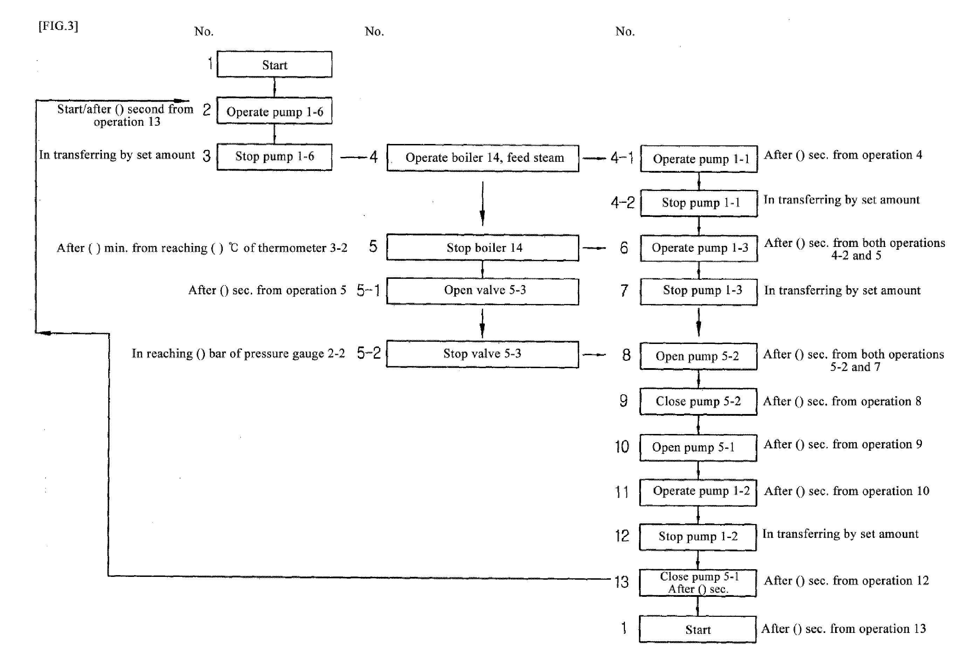

Hereinafter, a second embodiment of the present invention will be described based on an operating logic shown in FIG. 3.

In the organic material thermal hydrolysis system shown in FIG. 1, the weight of injected sludge is continuously measured by the hopper load cell 7-1 installed under the hopper, the sludge feeding pump 1-6 is operated to transfer a set of amount of sludge into the hopper, and the operation of the sludge feeding pump is stopped.

An amount of sludge to be injected into the hopper is continuously measured by allowing the hopper load cell installed under the hopper to cooperate with the sludge feeding pump, so that the sludge is injected into the hopper by an amount of the sludge set in the PLC or the micro-computer. An amount of sludge to be injected and stored into the hopper is preferably set to an amount five times to 10 times greater than an amount of sludge treated one time in the reactor serving as a core element of the present invention, so that the sludge is injected into the hopper.

Preferably, the operation of the organic material thermal hydrolysis system is preferably started in the state that an amount of sludge to be treated one time in the reactor has been injected before the organic material thermal hydrolysis system according to the present invention is automatically operated. Accordingly, energy applied in the treatment of the sludge can be saved and an operating logic according to the present invention is instantly applied, so that the organic material thermal hydrolysis system can be automatically operated.

Otherwise, according to an additional step, the conditioning tank valve 5-1 installed at one side of a pipe connected to the reactor may be opened in order to transfer sludge stored in the conditioning tank into the reactor through the connected pipe by using a conditioning tank pump. Then, the conditioning tank pump may be operated so that the sludge may be transferred into the reactor by a set amount and the conditioning tank may be emptied. Thereafter, the operation of the conditioning tank pump 1-2 may be stopped, and the conditioning tank valve 5-1 may be closed.

After directly injecting an amount of sludge to be treated one time in the reactor from the sludge storage tank to the reactor, an automatic control operation can be performed through the operating logic designed according to the present invention.

After the sludge has been transferred into the conditioning tank by a set amount by using the hopper pump 1-1 and the hopper load cell 7-1, the operation of the hopper pump is stopped, and the boiler 14 (see FIG. 1) is operated, so that the temperature of the reactor is maintained to a set temperature in the range of 150 °C to 200 °C, and the internal pressure of the reactor is maintained to a set value in the range of 6 bar to 12 bar, which performs the thermal hydrolysis process for a set time.

The time for the thermal hydrolysis process is varied depending on a temperature, a pressure, and an amount of injected sludge, and preferably set to a value in the range of 30 minutes to 60 minutes by taking into consideration the variation condition of the time.

While starting the heating of the reactor 11 by operating the boiler 14, the sludge is transferred into the conditioning tank 10 by using the hopper pump 1-1 and the conditioning tank load cell 7-2.

Sludge is transferred from the hopper 9 to the conditioning tank 10 by an amount set based on the weight of sludge to be treated one time in the reactor 11, which is measured by the conditioning tank load cell 7-2 installed under the conditioning tank 10, and the operation of the hopper pump 1-1 is stopped.

If the thermal hydrolysis process is terminated after the thermal hydrolysis process has been performed for a time in the PLC or the micro-computer, in order to efficiently use high-temperature waste energy existing at the upper portion of the reactor 11 before the sludge provided in the reactor 11 is transferred into the lysis tank 12, the reactor pressure reducing valve 5-3 is opened so that internal steam existing in the reactor is transferred to heat the conditioning tank 10 so that sludge stored in the conditioning tank is preheated.

Simultaneously, the lysis tank is emptied by operating the lysis tank pump 1-3 in order to receive the sludge subject to the thermal hydrolysis reaction made in the reactor.

In order to empty the lysis tank 12, if the weight of the sludge stored in the lysis tank is reduced to reach the set weight as the weight of the sludge is continuously measured by the lysis tank load cell 7-4 installed under the lysis tank, the operation of the lysis tank pump 1-3 is stopped.

Thereafter, the reactor pressure reducing valve 5-3 is closed, and a reactor valve 5-2 is opened so that the sludge subject to the thermal hydrolysis reaction is transferred into the lysis tank by the set weight or for the set time, and the reactor valve 5-2 is closed.

Regarding the set weight of the sludge for the transferring of the sludge into the lysis tank 12, if the weight of the sludge stored in the reactor is reduced to reach the set weight as the weight of the sludge stored in the reactor is measured by the reactor load cell 7-3, the reactor valve 5-2 is closed.

A unit for transferring sludge from the reactor 11 into the lysis tank 12 may be configured by using an internal pressure remaining in the reactor after the steam has been transferred into the conditioning tank or by using an additional transfer pump.

Next, in order to transfer the sludge stored in the conditioning tank into the reactor, the reactor valve 5-1 is opened, and the conditioning tank pump 1-2 is operated, so that the sludge is transferred by an amount of sludge to be treated one time in the reactor. Then, the operation of the conditioning tank pump 1-2 is stopped, and the reactor valve 5-1 is closed.

According to the second embodiment, an operating logic of continuously treating the sludge by repeating the technical steps described above is provided to improve the digestion efficiency and to minimize an amount of the dehydrated cake in a dehydration process after the digestion process has been performed.

Hereinafter, the technical constitution described in the second embodiment will be summarized. The technical constitution is configured to include the steps of (a) measuring weight of sludge discharged from the sludge dehydrating facility, operating the sludge feeding pump, transferring a set amount of sludge into the hopper, and stopping the operation of the sludge feeding pump, (b) heating the temperature of the reactor to a set temperature by operating the boiler and maintaining the temperature of the reactor at the set temperature, and maintaining the internal pressure of the reactor at the set value while thermally hydrolyzing the sludge, (c) transferring a set amount of sludge from the hopper to the conditioning tank by using the hopper pump when the boiler is operated, (d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and simultaneously emptying the lysis tank by operating the lysis tank pump in order to receive the sludge subject to the thermal hydrolysis reaction made in the reactor, (e) closing the reactor pressure reducing valve and allowing the reactor valve to be opened so that the sludge subject to the thermal hydrolysis reaction is transferred into the lysis tank, and closing the reactor valve, and (f) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (f).

### <Embodiment 3>

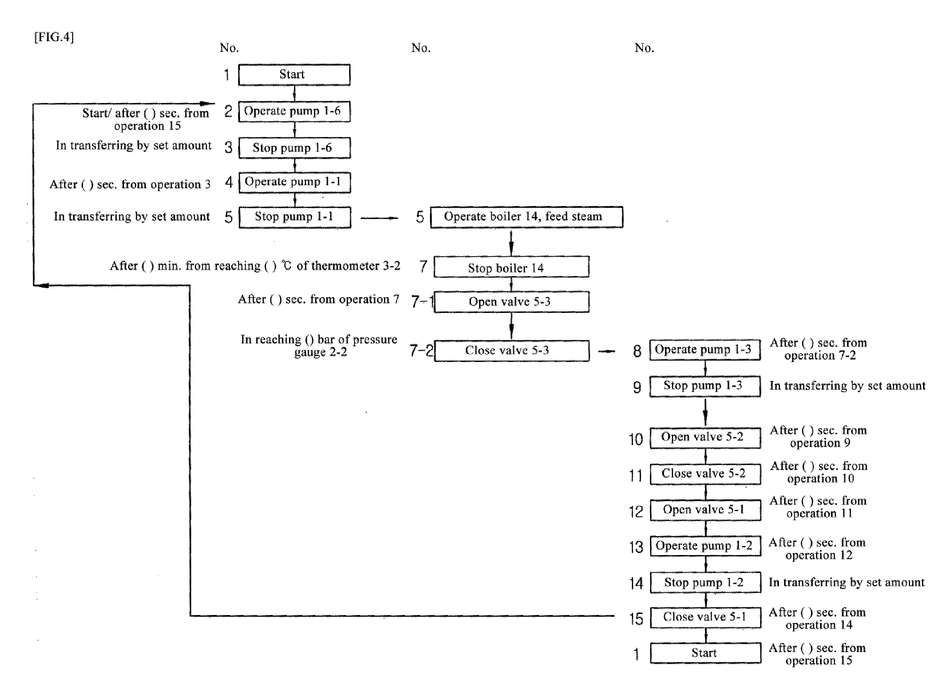

Hereinafter, a third embodiment of the present invention will be described based on an operating logic shown in FIG. 4.

In the organic material thermal hydrolysis system shown in FIG. 1, the weight of injected sludge is continuously measured by the hopper load cell 7-1 installed at a lower end of the hopper, the sludge feeding pump 1-6 is operated to transfer a set amount of sludge into the hopper, and the operation of the sludge feeding pump 1-6 is stopped.

An amount of sludge to be injected into the hopper is measured by the hopper load cell 7-1 installed under the hopper, so that the sludge is injected into the hopper by an amount of the sludge set in the PLC or the micro-computer. An amount of sludge to be injected and stored into the hopper is preferably set to an amount five times to 10 times greater than an amount of sludge treated one time in the reactor serving as a core component of the present invention, so that the sludge is injected into the hopper for the storage of the sludge in the hopper.

The sludge is transferred into the conditioning tank by a set amount using the hopper pump 1-1, and the operation of the hopper pump 1-1 is stopped.

Similarly to the first and second embodiments, according to the third embodiment, the operation of the organic material thermal hydrolysis system is started in the state that an amount of sludge to be treated one time in the reactor has been injected before the organic material thermal hydrolysis system according to the present invention is operated normally. Accordingly, energy applied in the treatment of the sludge can be saved and an operating logic designed according to the present invention is applied, so that an automatic control operation can be performed from an initial stage.

The sludge is transferred to the conditioning tank using the hopper pump by a set amount and the operation of the hopper pump is stopped. Then, the boiler 14 (see FIG. 1) is operated, so that the temperature of the reactor is set and maintained to a value in the range of 150 °C to 200 °C, and the pressure of the reactor is set and maintained to a value in the range of 6 bar to 12 bar, so that the thermal hydrolysis process is used for a set time.

The time for the thermal hydrolysis process is varied depending on a temperature, a pressure, and an amount of injected sludge, and preferably set to a value in the range of 30 minutes to 60 minutes by taking into consideration the variation condition of the time.

An amount of sludge transferred from the hopper 9 into the conditioning tank is preferably determined based on the weight of the sludge to be treated one time in the reactor through the cooperation between the hopper load cell 7-1 installed under the conditioning tank and the hopper pump 1-1 for the transferring of the sludge.

If the thermal hydrolysis process is terminated after the thermal hydrolysis process has been performed for a time set in the PLC or the micro-computer, in order to efficiently use high-temperature waste energy existing at the upper portion of the reactor before the sludge provided in the reactor is transferred into the lysis tank, the reactor pressure reducing valve 5-3 is opened so that internal steam existing in the reactor is transferred to heat the conditioning tank so that sludge stored in the conditioning tank is preheated.

Simultaneously, the lysis tank is emptied by operating the lysis tank pump 1-3 in order to receive the sludge subject to the thermal hydrolysis reaction made in the reactor.

In order to empty the lysis tank 12, if the weight of the sludge stored in the lysis tank is reduced to reach the set weight as the lysis tank load cell 7-4 installed under the lysis tank and the conditioning tank pump are configured to cooperate with each other, the operation of the lysis tank pump 1-3 is stopped.

Thereafter, the reactor pressure reducing valve 5-3 is closed, and the reactor valve 5-2 is opened so that the sludge subject to the thermal hydrolysis reaction is transferred into the lysis tank by the set weight or for the set time using a remaining pressure, and the reactor valve 5-2 is closed.

Regarding the set weight of the sludge for the transferring of the sludge into the lysis tank 12, if the weight of the sludge stored in the reactor is reduced to reach the set weight as the weight of the sludge is continuously measured by the reactor load cell 7-3 installed under the reactor, the reactor valve 5-2 is closed.

Next, in order to transfer the sludge stored in the conditioning tank into the reactor, the conditioning tank valve 5-1 is opened, and the conditioning tank pump 1-2 is operated, so that the sludge is transferred by an amount of sludge to be treated one time in the reactor. Then, the operation of the conditioning tank pump 1-2 is stopped, and the conditioning tank valve 5-1 is closed.

According to the third embodiment, an operating logic of continuously treating the sludge by repeating the technical steps described above is performed to improve the digestion efficiency and to minimize an amount of the dehydrated cake in a dehydration process after the digestion process has been performed.

Hereinafter, the technical constitution described in the third embodiment will be summarized. The technical constitution is configured to include the steps of (a) measuring weight of sludge discharged from the sludge dehydrating facility, operating the sludge feeding pump in the organic material thermal hydrolysis system, transferring a set amount of sludge into the hopper, and stopping the operation of the sludge feeding pump, (b) transferring a set amount of sludge from the hopper to the conditioning tank using the hopper pump, (c) heating the temperature of the reactor to a set temperature by operating the boiler and maintaining the temperature of the reactor at the set temperature, and maintaining the internal pressure of the reactor at the set value, while thermally hydrolyzing the sludge, (d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and closing a pressure reducing valve, (e) emptying the lysis tank by operating the lysis tank pump in order to receive the sludge subject to the thermal hydrolysis reaction made in the reactor, (f) allowing the reactor valve to be opened so that the sludge subject to the thermal hydrolysis reaction is transferred into the lysis tank, and closing the reactor valve, and (g) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (g).

According to the first, second, and third embodiments described above, the unit for transferring the sludge from the reactor to the lysis tank may be configured by using a remaining pressure in the reactor or using an additional transfer pump after the steam has been used to preheat the conditioning tank.

Hereinafter, the operating time points of peripheral valves and peripheral pumps shown in FIG. 1 in the operating logics according to the first to third embodiments described above will be described in detail.

A vent valve 5-5 installed at the upper portion of the conditioning tank of FIG. 1 is opened after the operation of the sludge feeding pump 1-6 has been stopped and closed after the operation of the hopper pump 1-1 has been stopped.

A sludge agitator 8-2 installed in the lysis tank of FIG. 1 is operated while the operation of a sludge treatment system is started, and the operation of the sludge agitator 8-2 is stopped if a set time is elapsed after the operation of a heat exchanger circulation pump 5-9 is stopped.

As shown in FIG. 1, a vent valve 5-7 installed at the upper portion of the lysis tank is opened after the operation of the boiler 14 is stopped according to the first to third embodiments, and is closed if a set time is elapsed after the reactor valve 5-2 is closed.

As shown in FIG. 1, the operation of an agitator 8-1 installed in the conditioning tank is started if a set time is elapsed after a conditioning tank vent valve 5-5 is closed, and the operation of the agitator 8-1 is stopped if a set time is elapsed after the lysis tank vent valve 5-7 is closed.

As shown in FIG. 1, a vent valve 5-6 installed at an upper portion of the reactor is opened if a set time is elapsed after the operation of the lysis tank agitator 8-1 is stopped, and the conditioning tank valve 5-1 is opened if a set time is elapsed after the reactor vent valve 5-6 is opened. The conditioning tank valve 5-1 is opened if a set time is elapsed after the reactor vent valve 5-6 is opened, and the conditioning tank pump 1-2 is operated if a set time is elapsed after the conditioning tank valve 5-1 is opened.

The conditioning tank valve 5-1 is closed if a set time is elapsed after the operation of the conditioning tank pump 1-2 is stopped, and the reactor vent valve 5-6 is closed if a set time is elapsed after the conditioning tank valve 5-1 is closed.

The set times are varied depending on the type of the sludge, the temperature and the pressure of the reactor, and the volume of the reactor. The set times may be set in the range of several seconds to several tens of minutes, but may have a value beyond the range.

The reactor, which is used for the thermal hydrolysis of the sludge and operated at high temperature and pressure, and the lysis tank and the conditioning tank operated at a temperature slightly lower than that of the reactor are provided therein with a pressure sensor and a temperature sensor in order to operate at preset temperature and pressure in cooperation with a steam feeding valve and/or the boiler.

The tanks and the pipes are provided at one sides thereof with various sensors, valves, and pumps fixedly installed thereon and required for the automatic control by the PLC or the micro-computer, so that the tanks and the pipes are operated together.

In addition, a deodorization pipe for removing smell generated from the reactor, an air feeding pipe of the conditioning tank, a cooling water feeding pipe and a boiler water feeding pipe of the heat exchanger may be additionally provided if necessary.

Hereinafter, an operating logic of the organic material thermal hydrolysis system employing at least two reactors and having the operating logic of the present invention applied thereto will be described with reference to FIGS. 5 to 12.

FIG. 5 is a view showing that at least two reactors are employed, all elements shown in FIG. 5 are assigned with the same reference numerals of the elements of FIG. 1 except for reference numerals of the reactors, and the reference numerals assigned to the reactors will be described in detail in the following description.

A combined heat and power generation device configured to continuously produce electricity uses about 30% of applied energy to produce electricity, and disposes about 70% of the energy as waste heat.

Since the waste heat consecutively generated from such a system is used for the organic material thermal hydrolysis system for thermally hydrolyzing the organic material contained in the sludge according to the present invention, the waste heat generated from the combined heat and power generation device is effectively used to improve the thermal hydrolysis and digestion efficiency of the sludge and to improve dehydration in a dehydration process after the digestion process has been performed, so that an amount of dehydrated sludge is significantly reduced.

According to the present invention, the boiler is operated by using waste heat consecutively generated from the combined heat and power generation device to make steam so that the temperature of the reactor is increased.

To this end, according to the present invention, at least two reactors are installed in parallel between the conditioning tank and the lysis tank or a flush tank, and sequentially heated with a time interval to a set temperature required for the thermal hydrolysis process by using waste heat consecutively generated from the combined heat and power generation device, and other reactors are heated for a time required for the thermal hydrolysis process, so that the waste heat can be efficiently used.

As shown in FIG. 5, if at least two reactors are installed between the conditioning tank and the lysis tank or the flush tank, the size of each reactor serving as an important element in the whole organic material thermal hydrolysis system can be reduced. Accordingly, a problem of degrading the thermal hydrolysis efficiency if a great amount of sludge exists in the reactor can be overcome, and the heating time, the reaction time, and the transfer time of the reactor can be efficiently used, so that the utilization of the reactors can be improved.

As shown in FIG. 5, at least two reactors installed between the conditioning tank and the lysis tank or the flush tank may be individually provided therein pipes for receiving or transferring sludge, and the pipes may be provided at one sides thereof with valves and transfer pumps for transferring the sludge.

In addition, a control logic based on a PLC or a micro-computer is employed, so that an automatic control operation is performed in each sludge treatment step and tank with times or weight set in a memory, and an operation is performed with the optimal time and weight, thereby efficiently treating the sludge. In addition, the control logic is used to preheat or heat a peripheral device by using waste energy and waste heat generated from the reactor, so that energy efficiency can be improved.

An operating logic to perform a control operation based on the PLC or the micro-computer cooperates with sensors in each step according to time series, so that the operating logic can be performed according to values set in the memory.

Hereinafter, the whole structure for the operating logic of the organic material thermal hydrolysis system according to the present invention will be described.

In order to continuously and efficiently perform the thermal hydrolysis process for sludge stored in the sludge storage tank, sludge is stored in amount corresponding to several times greater than an amount of sludge to be treated one time by the organic material thermal hydrolysis system, and a set amount of sludge is injected into the hopper by using the sludge feeding pump so that the flow of the sludge can be continuously controlled.

The weight of sludge to be injected into the hopper is measured by the hopper load cell installed under the hopper to control an amount of sludge injected into the hopper. In this case, the set value is determined to an amount five times to 10 times greater than the sum of amounts of sludge to be injected into at least two reactors, and stored and maintained.

The sedge stored in the hopper 9 is transferred to the conditioning tank 10 through a pipe using the hopper pump, and the conditioning tank 10 measures the weight of the sludge injected into the conditioning tank 10 by the load cell installed under the conditioning tank 10 and receives the sludge injected by an amount set in the PLC. In this case, preferably, the amount of the sludge injected into the conditioning tank 10 is approximately equal to the sum of amounts of sludge injected into at least two reactors, and the function rate is maintained in the range of 70% to 90%.

The conditioning tank preheats sludge before injecting the sludge into each reactor so that the sludge is rapidly thermally hydrolyzed when the sludge is injected into each reactor. The preheating temperature of the sludge is preferably maintained in the range of 80 °C to 100 °C.

The preheating by the conditioning tank 10 is performed by using steam heated at an upper portion of each reactor 11.

The preheated sludge is sequentially transferred into the reactors through pipes, and each reactor measures the weight of the sludge, which is continuously injected, by the load cell installed under the reactor to control an amount of the sludge to inject the sludge by an amount set in the PLC or a micro-computer. An amount of the injected sludge is preferably in the range of 25 % to 60 % based on the volume of the reactor for the effective organic material thermal hydrolysis.

Regarding the conditions of each reactor, the temperature of the reactor is set and maintained to a value in the range of 150 °C to 200 °C, and the pressure of the reactor is set and maintained to a value in the range of 6 bar to 12 bar, so that a higher molecule organic material is hydrolyzed into a lower molecule organic material to improve digestion efficiency and minimize an amount of a sludge dehydrated cake in a dehydration process after the digestion process has been performed. The reaction time of each reactor is preferably in the range of 20 minutes to 120 minutes, which may be variously set depending on the internal temperature and the internal pressure of each reactor.

A temperature sensor and a pressure sensor are installed at one side in each reactor to measure the temperature of heat and an internal pressure when the heating is performed by the boiler, so that the value set in a memory is maintained to efficiently perform the thermal hydrolysis process.

Sludge subject to the thermal hydrolysis in each reactor is transferred to the lysis tank or the flush tank as related valves are opened, and the unit for transferring the sludge may transfer the sludge by using a unit for using a pressure existing in each reactor and the transfer pump. Each of reactor values is installed at one side of the pipe.

The lysis tank or the flush tank is configured to retrieve applied energy in the thermal hydrolysis process through the lysis of a cell wall of a hydrolyzed microorganism. The lysis tank or the flush tank is configured to preheat the boiler water by using waste heat or waste energy.

In order to lower the temperature of the sludge after the lysis of the cell wall of the hydrolyzed microorganism to a temperature sufficient for digestion, the sludge is cooled through the heat exchanger and injected into the digestion tank. The temperature appropriate to the digestion is in the range of 35 °C to 55 °C.

Hereinafter, description will be made regarding the detailed technical structure for the operating logic of the organic material thermal hydrolysis system designed according to the present invention in order to improve the digestion efficiency of the digestion sludge formed by the organic material thermal hydrolysis system and to minimize an amount of the dehydrated cake in a dehydration process after the digestion process has been performed.

FIG. 5 shows a conditioning tank valve 5-1-1, a reactor valve 5-2-1, a reactor pressure reducing valve 5-3-1, a reactor vent valve 5-6-1, a load cell 7-3-1, and a steam feeding valve 14-1, which are related to a first reactor.

Second to fourth reactors to be described later in first and second embodiments are coupled with the first reactor in parallel, and have a plurality of valves and load cells described above, which can be easily understood by those skilled in the art.

### <Embodiment 4>

A fourth embodiment according to the present invention will be described with reference to FIGS. 6 to 9. FIGS. 6 to 9 show an operating logic that three reactors are installed in parallel between the conditioning tank and the dissolve tank. The reactors are sequentially heated by using waste heat generated from a combined heat and power generation device and maintained for a time necessary for reaction, and then sequentially transfer sludge.

FIGS. 6 to 9 are flowcharts showing four parts divided from one drawing because letters and drawings representing elements are excessively small if the elements are shown in one drawing.

As shown in FIG. 5, if three reactors are installed in parallel between the conditioning tank and the lysis tank or the flush tank, pipes are installed between each of the reactors and the conditioning tank, and installed between each of the reactors and the lysis tank or the flush tank for the transferring of the sludge, so that each of the reactors cooperates with the conditioning tank and the lysis tank or the flush thank and thus can be automatically controlled.

The installed pipes are provided at one sides thereof with conditioning tank valve 5-1-1, 5-1-2, and 5-1-3 and reactor valves 5-2-1, 5-2-2, and 5-2-3, respectively. In addition, the pipes are provided at one sides thereof with reactor pressure reducing valves 5-3-1, 5-3-2, and 5-3-3 used when preheating the conditioning tank by using the steam of the reactor, respectively. Reactor vent valves 5-6-1, 5-6-2, and 5-6-3 are installed at upper portions of the reactors, respectively, so that gas can be discharged, and load cells 7-3-1, 7-3-2, and 7-3-3 are installed under the reactors, respectively, so that weights can be measured.

In relation to a first reactor 11-1, the conditioning tank valve 5-1-1, the reactor valve 5-2-1, the reactor pressure reducing valve 5-3-1, the reactor vent valve 5-6-1, and the load cell 7-3-1 are installed.

In relation to a second reactor 11-2, the conditioning tank valve 5-1-2, the reactor valve 5-2-2, the reactor pressure reducing valve 5-3-2, the reactor vent valve 5-6-2, and the load cell 7-3-2 are installed.

In relation to a third reactor 11-3, the conditioning tank valve 5-1-3, the reactor valve 5-2-3, the reactor pressure reducing valve 5-3-3, the reactor vent valve 5-6-3, and the load cell 7-3-3 are installed.

Pipes for feeding steam used to heat the respective first to third reactors of the pipes may be installed between the boiler 14 and the respective first to third reactors of the pipes. The pipes may be provided at one sides thereof with respective steam feeding valves 14-1, 14-2, and 14-3 to feed or cut off steam.

As shown in FIG. 5, three reactors are installed in parallel between the conditioning tank and the lysis tank or the flush tank, and pipes are installed to transfer sludge from the conditioning tank to each reactor. The conditioning tank valves 5-1-1, 5-1-2, and 5-1-3 are installed in the pipes, respectively, to block or allow the transferring of the sludge.

Pipes may be installed to transfer sludge from the reactors to the lysis tank or the flush tank, respectively. The pipes may be provided therein with respective reactor valves 5-2-1, 5-2-2, and 5-2-3 thereof to block or allow the transferring of the sludge subject to the thermal hydrolysis process.

In detail, after transferring sludge from the conditioning tank to the first reactor, the sludge is heated for 45 minutes by using steam, which is continuously generated from the combined heat and power generation device and fed as the steam feeding valve 14-1 installed in the pipe is opened, so that the temperature of the sludge is increased to a set temperature and maintained. Then, after allowing the sludge to be subject to a reaction at the set temperature for 90 minutes, sludge subject to the thermal hydrolysis is transferred to the lysis tank or the flush tank.

Next, in order to use the steam continuously generated from the combined heat and power generation device, after the heating process of the first reactor has been finished, sludge transferred from the conditioning tank to the second reactor is heated for 45 minutes by using steam, which is continuously generated from the combined heat and power generation device and fed as the steam feeding valve 14-1 installed in the pipe is opened, so that the temperature of the sludge becomes a set temperature. Then, after allowing the sludge to be subject to a reaction at the set temperature for 90 minutes, sludge subject to the thermal hydrolysis is transferred to the lysis tank.

Next, in order to use the steam continuously generated from the combined heat and power generation device, after the heating process of the second reactor has been finished, sludge transferred from the conditioning tank to the third reactor is heated for 45 minutes by using steam, which is continuously generated from the combined heat and power generation device and fed as the steam feeding valve 14-1 installed in the pipe is opened, so that the temperature of the sludge is increased to a set temperature and maintained. Then, after allowing the sludge to be subject to a reaction at the set temperature for 90 minutes, sludge subject to the thermal hydrolysis is transferred to the lysis tank.

Then, in order to use the steam continuously generated from the combined heat and power generation device, after the heating process of the third reactor has been finished, sludge transferred from the conditioning tank to the first reactor is heated for 45 minutes by using steam, which is continuously generated from the combined heat and power generation device. Accordingly, the reactors having a small size are sequentially and continuously are heated, so that the thermal hydrolysis process can be effectively performed.

The time to increase the temperatures of the reactors may be set to 45 minutes, and the time to transfer the sludge from the conditioning tank to each reactor and the time to transfer the sludge from each reactor to the lysis tank or the flush tank may be included in 90 minutes set as a reaction time.

The above numeric values are provided only for illustrative purpose. The time to increase the temperatures of the reactors is preferably set in the range of 20 minutes to 60 minutes. The time to transfer the sludge from the conditioning tank to each reactor, the time to transfer the sludge from each reactor to the lysis tank or the flush tank, and the reaction time may be set in the range of 60 minutes to 120 minutes.

The time to increase the temperatures of the reactors and the reaction time may be varied depending on set values for the internal temperature and the internal pressure of the reactor, so that continuous and sequential control operations are possible.

In addition, the three reactors, which are connected in parallel between the conditioning tank and the lysis tank or the flush tank, may be continuously and sequentially heated, respectively, in a unit of 45 minutes, so the dissipation of the waste heat continuously generated from the combined heat and power generation deice can be minimized.

Since the size of the reactor can be reduced, the internal temperature and the internal pressure of the reactor can be easily set. Accordingly, the reaction efficiency of the organic sludge can be improved, and an amount of the dehydrated cake can be minimized due to the improved reaction efficiency when the digestion sludge is dehydrated.

Hereinafter, the whole flowchart of the operating logic of the organic material thermal hydrolysis system according to the first embodiment will be described with reference to FIG. 5.

In the organic material thermal hydrolysis system shown in FIG. 5, the weight of injected sludge is continuously measured by the hopper load cell 7-1 installed at a lower end portion of the hopper, the sludge feeding pump 1-6 is operated to transfer a set amount of sludge into the hopper through the transfer pipe, and the operation of the sludge feeding pump 1-6 is stopped.

An amount of sludge to be injected into the hopper is measured by the hopper load cell 7-1 installed under the hopper to transfer the sludge into the hopper by the amount of the sludge set in the PLC. An amount of sludge to be injected and stored into the hopper is preferably set to an amount five times to 10 times greater than the sum of amounts of sludge treated one time in the three reactors which serve as a core component of the present invention and are installed in parallel between the conditioning tank and the lysis tank.

Next, in order to transfer the sludge stored in the hopper into the conditioning tank 10 through the transfer pipe connected to the hopper, the hopper valve 6-1 installed at one side of the transfer pipe is opened and a set amount of the sludge is transferred into the conditioning tank by using the hopper pump 1-1 and the conditioning tank load cell 7-2, and the operation of the hopper pump is stopped.

The set amount of the sludge is determined by the conditioning tank load cell 7-2, which measures the weight of sludge injected into the conditioning tank. The set amount of the sludge is preferably determined to an amount equal to or approximate to the sum of amounts of sludge treated one time in the three reactors installed in parallel between the conditioning tank and the lysis tank.

The normal operation of the reactor is started in the state that an amount of sludge to be treated one time in each of the reactors installed in parallel has been injected before the organic material thermal hydrolysis system according to the present invention is operated. Accordingly, energy applied in the treatment of the sludge can be saved when the organic material thermal hydrolysis system is operated and the sludge is automatically treated in an initial stage.

Otherwise, in order to transfer sludge stored in the conditioning tank into the three reactors 11-1, 11-2, and 11-3, which are installed in parallel between the conditioning tank and the lysis tank or the flush tank, through the connected pipe by using the conditioning tank pump 1-2, the conditioning tank valve 5-1-1, 5-1-2, and 5-1-3, which are installed at one sides of pipes connected to the reactors 11-1, 11-2, and 11-3, respectively, may be opened and closed, and the conditioning tank pump 1-2 is operated so that a set amount of sludge is transferred into the reactors 11-1, 11-2, and 11-3. Thereafter, the operation of the conditioning tank pump 1-2 may be stopped, and the conditioning tank valve 5-1-1, 5-1-2, and 5-1-3 may be closed.

After the set amount of sludge has been transferred into the conditioning tank by using the hopper pump 1-1, the operation of the hopper pump 1-1 is stopped, the temperature of the reactor is increased to a temperature set in the range of 150 °C to 200 °C and maintained by using steam generated from the boiler 14 (see FIG. 1) operated by the waste heat generated from the combined heat and power generation, and the internal pressure of the reactor is maintained to a set value in the range of 6 bar to 12 bar, which performs the thermal hydrolysis process.

The time for the thermal hydrolysis process is varied depending on the temperature, the pressure, and an amount of injected sludge, and preferably set in the range of 20 minutes to 120 minutes.

If the thermal hydrolysis process is terminated as a set time is elapsed, an operating logic is performed in which, in order to efficiently use high-temperature waste energy existing at the upper portion of each reactor before the sludge provided in the three reactors are transferred into the lysis tank or the flush tank, a related value among the reactor pressure reducing valves 5-3-1, 5-3-2, and 5-3-3 is opened so that internal steam existing in the reactor is transferred to heat the conditioning tank so that sludge stored in the conditioning tank is preheated.

Simultaneously, an operating logic is performed in which the lysis tank or the flush tank is emptied to a set weight by operating the lysis tank pump or the flush tank pump 1-3 in order to receive the sludge subject to the thermal hydrolysis reaction made in the three reactor.

The unit for emptying the lysis tank or the flush tank 12 may be operated together with the operation of the lysis tank load cell 7-4 installed under the lysis tank or the flush tank 12. In other words, if the weight of the sludge stored in the lysis tank or the flush tank 12 is reduced to reach the set weight as the weight of the sludge stored in the lysis tank or the flush tank 12 is continuously measured, the operation of the lysis tank pump 1-3 may be stopped.

Thereafter, a related valve among the reactor pressure reducing valves 5-3-1, 5-3-2, and 5-3-3 for the three reactors is closed, and a related valve among the reactor valve 5-2-1, 5-2-2, and 5-2-3 is opened so that the sludge subject to the thermal hydrolysis reaction is transferred into the lysis tank or the flush tank for a set time, and the related valve among the reactor valves 5-2-1, 5-2-2, and 5-2-3 is closed.

Regarding the set weight of the sludge for the transferring of the sludge into the lysis tank or the flush tank 12, if the weight of the sludge stored in each of the reactors 11-1, 11-2, and 11-3 is reduced to reach the set weight as the weight of the sludge stored in the reactors 11-1, 11-2, and 11-3 are continuously measured by using the reactor load cells 7-3-1, 7-3-2, and 7-3-3 installed under the reactors, respectively, a related valve among the reactor valves 5-2-1, 5-2-2, and 5-2-3 is automatically closed.

Thereafter, in order to transfer the sludge stored in the conditioning tank 10 into the reactors 11-1, 11-2, and 11-3, the related conditioning tank valves 5-1-1, 5-1-2, 5-1-3 are opened, the conditioning tank pump 1-2 and the conditioning tank load cell 7-2 are operated in cooperation with each other to transfer the sludge stored in the conditioning tank 10 by the set amount, the operation of the conditioning tank pump 1-2 is stopped, and the related conditioning tank valves 5-1-1, 5-1-2, and 5-1-3 are closed.

According to the fourth embodiment, an operating logic of continuously treating the sludge by repeating the technical steps described above is provided to improve the digestion efficiency and to minimize an amount of the dehydrated cake in a dehydration process after the digestion process has been performed.

Hereinafter, the operating logic of the organic material thermal hydrolysis system according to the fourth embodiment will be summarized based on the technical constitution described above. The operating logic of the organic material thermal hydrolysis system is configured to include a) measuring weight of sludge discharged from the sludge dehydrating facility, operating the sludge feeding pump in the organic material thermal hydrolysis system, transferring a set amount of sludge into the hopper, and stopping the operation of the sludge feeding pump, b) transferring a set amount of sludge from the hopper into the conditioning tank by using the hopper pump, c) heating the reactor to a set temperature by operating the boiler, maintaining the temperature of the reactor at the set temperature, and maintaining the internal pressure of the reactor at a set pressure while thermally hydrolyzing the sludge of the reactor, d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and simultaneously emptying the lysis tank or flush tank by operating the lysis tank pump in order to receive the sludge subject to the thermal hydrolysis reaction made in the reactor, e) closing the reactor pressure reducing valve and allowing the reactor valve to be opened so that the sludge subject to the thermal hydrolysis reaction is transferred into the lysis tank, and closing the reactor valve, and f) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (f) for the organic material thermal hydrolysis. In addition, the operating logic of the organic material thermal hydrolysis system is realized by installing three reactors in parallel between the conditioning tank and the lysis tank, sequentially increasing the temperatures of the reactors to set temperatures and maintaining the temperatures of the reactors at the set temperatures in the state that the steam continuously generated from the combined heat and power generation device is not cooled, thereby efficiently operating the organic material thermal hydrolysis system.

Another operating logic of the organic material thermal hydrolysis system is configured to include (a) measuring weight of sludge discharged from the sludge dehydrating facility, operating the sludge feeding pump in the organic material thermal hydrolysis system, transferring a set amount of sludge into the hopper, and stopping the operation of the sludge feeding pump, (b) heating the temperature of the reactor to a set temperature by operating the boiler and maintaining the temperature of the reactor at the set temperature, and maintaining the internal pressure of the reactor at the set value, while thermally hydrolyzing the sludge, (c) transferring a set amount of the sludge from the hopper to the conditioning tank by using the hopper pump when the boiler is operated, (d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and simultaneously emptying the lysis tank or the flush tank by operating the lysis tank pump in order to receive the sludge subject to the thermal hydrolysis reaction made in the reactor, (e) closing the reactor pressure reducing valve and allowing the reactor valve to be opened so that the sludge subject to the thermal hydrolysis reaction is transferred into the lysis tank or the flush tank, and closing the reactor valve, (f) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (f) for the organic material thermal hydrolysis. In addition, the operating logic of the organic material thermal hydrolysis system is realized by installing three reactors in parallel between the conditioning tank and the lysis tank, sequentially increasing the temperatures of the reactors to set temperatures and maintaining the temperatures of the reactors at the set temperatures in the state that the steam continuously generated from the combined heat and power generation device is not cooled, thereby efficiently operating the organic material thermal hydrolysis system.

Still another operating logic of the organic material thermal hydrolysis system is configured to include the steps of (a) measuring weight of sludge discharged from the sludge dehydrating facility, operating the sludge feeding pump in the organic material thermal hydrolysis system, transferring a set amount of sludge into the hopper, and stopping the operation of the sludge feeding pump, (b) transferring the sludge from the hopper into the conditioning tank by the set amount by using the hopper pump, (c) heating the temperature of the reactor to a set temperature by operating the boiler and maintaining the temperature of the reactor at the set temperature, and maintaining the internal pressure of the reactor at the set value, while thermally hydrolyzing the sludge, (d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and closing the reactor pressure reducing valve, (e) emptying the lysis tank or the flush tank by operating the lysis tank pump in order to receive the sludge subject to the thermal hydrolysis reaction made in the reactor, (f) allowing the reactor valve to be opened to transfer the sludge subject to the thermal hydrolysis reaction into the lysis tank or the flush thank and closing the reactor valve, and (g) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (g) for the organic material thermal hydrolysis. In addition, the operating logic of the organic material thermal hydrolysis system is realized by installing three reactors in parallel between the conditioning tank and the lysis tank or the flush tank, sequentially increasing the temperatures of the reactors to set temperatures and maintaining the temperatures of the reactors at the set temperatures in the state that the steam continuously generated from the combined heat and power generation device is not cooled, thereby efficiently operating the organic material thermal hydrolysis system.

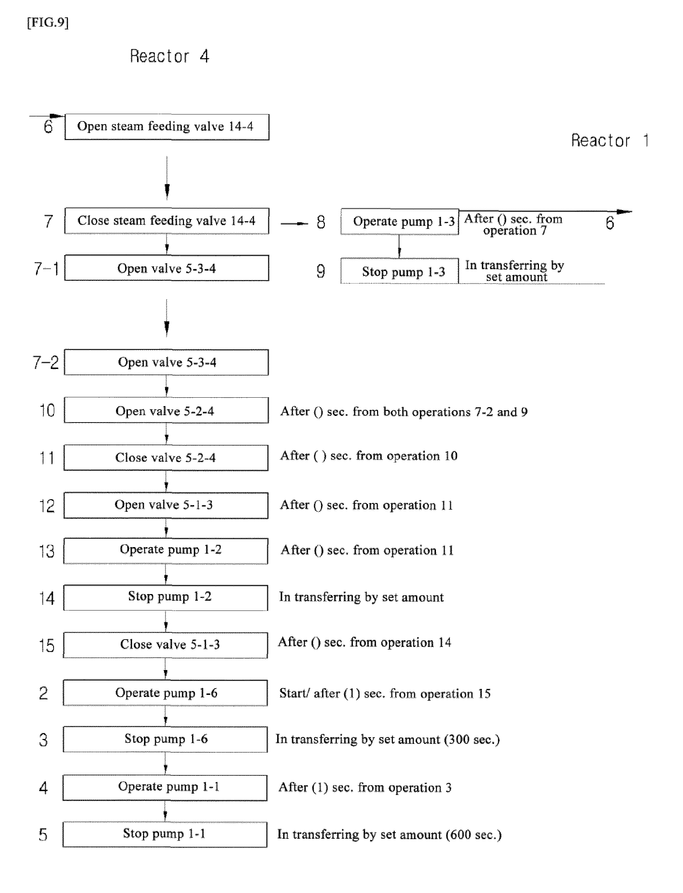

As shown in FIG. 9, if the feeding of the steam is terminated in the third reactor, the steam is circularly fed to the first reactor, so that the steam can be sequentially and continuously fed.

### <Embodiment 5>

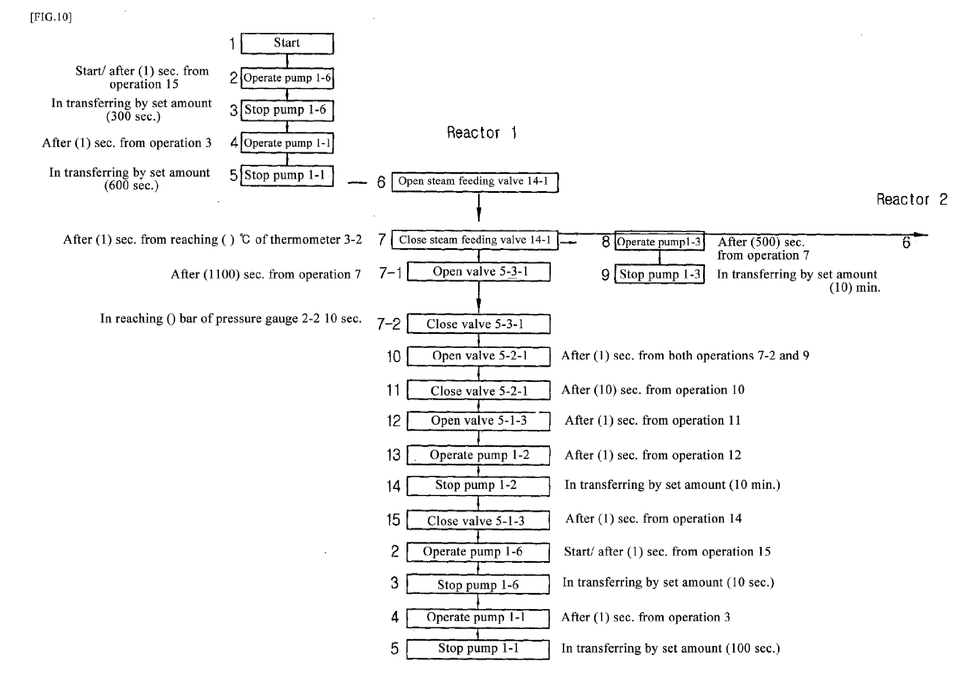

Hereinafter, a fifth embodiment according to the present invention will be described based on operating logics shown in FIGS. 10 to 12.

FIGS. 10 to 12 are flowcharts showing three parts divided from one drawing because letters and drawings representing elements are excessively small if the elements are shown in one drawing.

The fifth embodiment based on FIGS. 10 to 12 provides an operating logic in which the number of reactors is increased to four instead of three reactors according to the fourth embodiment.

In the organic material thermal hydrolysis system of FIG. 5, if fourth reactors are installed in parallel between the conditioning tank and the lysis tank, pipes are installed between each of the reactors and the conditioning tank, and installed between each of the reactors and the lysis tank for the transferring of the sludge, so that each of the reactors cooperates with the conditioning tank and the lysis tank and thus can be automatically controlled.

The installed pipes are provided at one sides thereof with conditioning tank valve 5-1-1, 5-1-2, 5-1-3, and 5-1-4 and reactor valves 5-2-1, 5-2-2, 5-2-3, and 5-2-4, respectively. In addition, the pipes are provided at one sides thereof with reactor pressure reducing valves 5-3-1, 5-3-2, 5-3-3, 5-3-4 used when preheating the conditioning tank by using the steam of the reactor, respectively.

Reactor vent valves 5-6-1, 5-6-2, 5-6-3, and 5-6-4 are installed at upper portions of the reactors, respectively, so that gas can be discharged, and load cells 7-3-1, 7-3-2, 7-3-3, and 7-3-4 are installed under the reactors, respectively, to measure the weight of the sludge.

In relation to a first reactor, the conditioning tank valve 5-1-1, the reactor valve 5-2-1, the reactor pressure reducing valve 5-3-1, the reactor vent valve 5-6-1, and the load cell 7-3-1 are installed.

In relation to a second reactor, the conditioning tank valve 5-1-2, the reactor valve 5-2-2, the reactor pressure reducing valve 5-3-2, the reactor vent valve 5-6-2, and the load cell 7-3-2 are installed.

In relation to a third reactor, the conditioning tank valve 5-1-3, the reactor valve 5-2-3, the reactor pressure reducing valve 5-3-3, the reactor vent valve 5-6-3, and the load cell 7-3-3 are installed.

In relation to a fourth reactor, the conditioning tank valve 5-1-4, the reactor valve 5-2-4, the reactor pressure reducing valve 5-3-4, the reactor vent valve 5-6-4, and the load cell 7-3-4 are installed.

Pipes for feeding steam used to heat the respective first to fourth reactors of the pipes may be installed between the boiler and the respective first to third reactors of the pipes. The pipes may be provided at one sides thereof with respective steam feeding valves 14-1, 14-2, 14-3, and 14-4 to feed or cut off steam.

The four reactors have pipes, which are installed to transfer the sludge from the conditioning tank to the reactor, respectively. The pipes have the conditioning tank valve 5-1-1, 5-1-2, 5-1-3, and 5-1-4, respectively, to block or allow the transferring of the sludge.

The reactors have pipes, which are installed to transfer sludge from the reactors to the lysis tank or the flush tank, respectively. The pipes may be provided therein with respective reactor valves 5-2-1, 5-2-2, 5-2-3, and 5-2-4 to block or allow the transferring of the sludge subject to the thermal hydrolysis process.

In detail, after transferring sludge from the conditioning tank to the first reactor, the sludge is heated for 30 minutes by using steam, which is continuously generated from the combined heat and power generation device and fed as the steam feeding valve 14-1 installed in the pipe is opened, so that the temperature of the sludge becomes a set temperature. Then, after allowing the sludge to be subject to the reaction at the set temperature for 90 minutes, sludge subject to the thermal hydrolysis is transferred to the lysis tank or the flush tank.

Next, in order to use the steam continuously generated from the combined heat and power generation device, after the heating process of the first reactor has been finished, sludge transferred from the conditioning tank to the second reactor is heated for 30 minutes by using steam, which is continuously generated from the combined heat and power generation device and fed as the steam feeding valve 14-2 installed in the pipe is opened, so that the temperature of the sludge is increased to a set temperature and maintained at the set temperature. Then, after the thermal hydrolysis reaction is made for 90 minutes at the set temperature, sludge subject to the thermal hydrolysis is transferred to the lysis tank.

Next, in order to use the steam continuously generated from the combined heat and power generation device, after the heating process of the second reactor has been finished, sludge transferred from the conditioning tank to the third reactor is heated for 30 minutes by using steam, which is continuously generated from the combined heat and power generation device and fed as the steam feeding valve 14-3 installed in the pipe is opened, so that the temperature of the sludge is increased to a set temperature and maintained at the set temperature. Then, after the thermal hydrolysis reaction is made for 90 minutes at the set temperature, sludge subject to the thermal hydrolysis is transferred to the lysis tank or the flush tank.

Next, in order to use the steam continuously generated from the combined heat and power generation device, after the heating process of the third reactor has been finished, sludge transferred from the conditioning tank to the fourth reactor is heated for 30 minutes by using steam, which is continuously generated from the combined heat and power generation device and fed as the steam feeding valve 14-1 installed in the pipe is opened, so that the temperature of the sludge is increased to a set temperature and maintained at the set temperature. Then, after the thermal hydrolysis reaction is made for 90 minutes at the set temperature, sludge subject to the thermal hydrolysis is transferred to the lysis tank or the flush tank.

Therefore, in order to use the steam continuously generated from the combined heat and power generation device, after the heating process of the third reactor has been finished, sludge transferred from the conditioning tank to the fourth reactor is heated for 30 minutes by using steam, which is continuously generated from the combined heat and power generation device and fed as the steam feeding valve 14-1 installed in the pipe is opened, so that the temperature of the sludge is increased to a set temperature and maintained at the set temperature. Then, after the thermal hydrolysis reaction is made for 90 minutes at the set temperature, sludge subject to the thermal hydrolysis is transferred to the lysis tank or the flush tank.

The time to increase the temperatures of the reactors may be set to 30 minutes, and the time to transfer the sludge from the conditioning tank to each reactor and the time to transfer the sludge from each reactor to the lysis tank may be included in 90 minutes set as a reaction time.

The above numeric values are provided only for illustrative purpose. The time to increase the temperatures of the reactors is preferably set in the range of 20 minutes to 60 minutes. The time to transfer the sludge from the conditioning tank to each reactor, the time to transfer the sludge from each reactor to the lysis tank, and the reaction time may be set in the range of 60 minutes to 120 minutes.

The time to increase the temperatures of the reactors and the reaction time may be varied depending on set values for the internal temperature and the internal pressure of the reactor, so that continuous and sequential control operations are possible.

In addition, the four reactors, which are connected in parallel between the conditioning tank and the lysis tank or the flush tank, respectively, may be heated for the unit of 30 minutes, so that the dissipation of the waste heat continuously generated from the combined heat and power generation deice can be minimized.

Since the size of the reactor can be reduced, the internal temperature and the internal pressure of the reactor can be easily set. Accordingly, the reaction efficiency of the organic sludge can be improved, and an amount of the dehydrated cake can be minimized due to the improved reaction efficiency when the digestion sludge is dehydrated.

Hereinafter, the whole flowchart of the operating logic of the organic material thermal hydrolysis system according to the first embodiment will be described with reference to FIG. 5.

In the organic material thermal hydrolysis system shown in FIG. 5, the weight of injected sludge is continuously measured by the hopper load cell 7-1 installed at the lower end portion of the hopper, the sludge feeding pump 1-6 is operated to transfer a set amount of sludge into the hopper through the transfer pipe, and the operation of the sludge feeding pump is stopped.

An amount of sludge to be injected into the hopper is measured by the hopper load cell 7-1 installed under the hopper to transfer the sludge into the hopper by the amount of the sludge set in the PLC. The amount of sludge to be injected and stored into the hopper is preferably set to an amount five times to 10 times greater than the sum of amounts of sludge treated one time in the four reactors which serve as a core component of the present invention and are installed in parallel between the conditioning tank and the lysis tank.

Next, in order to transfer the sludge stored in the hopper into the conditioning tank 10 through the transfer pipe connected to the hopper, the hopper valve 6-1 installed at one side of the transfer pipe is opened and a set amount of the sludge is transferred into the conditioning tank by using the hopper pump 1-1 and the conditioning tank load cell 7-2, and the operation of the hopper pump is stopped.

The set amount of the sludge is determined by the conditioning tank load cell 7-2, which measures the weight of sludge injected into the conditioning tank. The set amount of the sludge is preferably determined to an amount equal to or approximate to the sum of amounts of sludge treated one time in the four reactors installed in parallel between the conditioning tank and the lysis tank or the flush tank.

The normal operation of the reactor is started in the state that an amount of sludge to be treated one time in each of the reactors installed in parallel has been injected before the organic material thermal hydrolysis system according to the present invention is operated. Accordingly, energy applied in the treatment of the sludge can be saved when the organic material thermal hydrolysis system is operated and the sludge is automatically treated in an initial stage.

Otherwise, in order to transfer sludge stored in the conditioning tank into the four reactors 11-1, 11-2, 11-3, and 11-4, which are installed in parallel between the conditioning tank and the lysis tank, through the connected pipe by using the conditioning tank pump 1-2, the conditioning tank valve 5-1-1, 5-1-2, 5-1-3, and 5-1-4 which are installed at one sides of pipes connected to the reactors 11-1, 11-2, 11-3, and 11-4, respectively, may be opened and closed, and the conditioning tank pump 1-2 is operated so that a set amount of sludge is transferred into the reactors 11. Thereafter, the operation of the conditioning tank pump 1-may be stopped, and the conditioning tank valve 5-1-1, 5-1-2, 5-1-3, and 5-1-4 may be closed.

After the set amount of sludge has been transferred into the conditioning tank by using the hopper pump 1-1, the operation of the hopper pump 1-1 is stopped, the temperature of the reactor is increased to a temperature set in the range of 150 °C to 200 °C and maintained by using steam generated from the boiler 14 (see FIG. 1) operated by the waste heat generated from the combined heat and power generation, and the internal pressure of the reactor is maintained to a set value in the range of 6 bar to 12 bar, which performs the thermal hydrolysis process.

The time for the thermal hydrolysis process is varied depending on the temperature, the pressure, and an amount of injected sludge, and preferably set in the range of 20 minutes to 120 minutes.

If the thermal hydrolysis process is terminated as a set time is elapsed, an operating logic is performed in which, in order to efficiently use high-temperature waste energy existing at the upper portion of each reactor before the sludge provided in the four reactors are transferred into the lysis tank or the flush tank, a related value among the reactor pressure reducing valves 5-3-1, 5-3-2, 5-3-3, and 5-3-4 is opened so that internal steam existing in the reactor is transferred to heat the conditioning tank so that sludge stored in the conditioning tank is preheated.

Simultaneously, an operating logic is performed in which the lysis tank or the flush tank is emptied to a set weight by operating the lysis tank pump 1-3 in order to receive the sludge subject to the thermal hydrolysis reaction made in the four reactor.

The unit for emptying the lysis tank or the flush tank 12 may be operated together with the operation of the lysis tank load cell 7-4 installed under the lysis tank or the flush tank 12. In other words, if the weight of the sludge stored in the lysis tank or the flush tank 12 is reduced to reach the set weight as the weight of the sludge stored in the lysis tank or the flush tank 12 is continuously measured, the operation of the lysis tank pump 1-3 may be stopped.

Thereafter, a related valve among the reactor pressure reducing valves 5-3-1, 5-3-2, 5-3-3, and 5-3-4 for the four reactors is closed, and a related valve among the reactor valve 5-2-1, 5-2-2, 5-2-3, 5-2-4 is opened so that the sludge subject to the thermal hydrolysis reaction is transferred into the lysis tank or the flush tank for a set time, and the related valve among the reactor valves 5-2-1, 5-2-2, 5-2-3, and 5-2-4 is closed.

Regarding the set weight of the sludge for the transferring of the sludge into the lysis tank 12, if the weight of the sludge stored in each of the reactors 11-1, 11-2, 11-3, and 11-4 is reduced to reach the set weight as the weight of the sludge stored in the reactors 11-1, 11-2, and 11-3 are continuously measured by the reactor load cells 7-3-1, 7-3-2, 7-3-3, and 7-3-4 installed under the reactors, respectively, a related valve among the reactor valves 5-2-1, 5-2-2, 5-2-3, and 5-2-4 is automatically closed.

Thereafter, in order to transfer the sludge stored in the conditioning tank 10 into the reactors 11-1, 11-2, 11-3, and 11-4, the related conditioning tank valves 5-1-1, 5-1-2, 5-1-3, and 5-1-4 are opened, the conditioning tank pump 1-2 and the conditioning tank load cell 7-2 are operated in cooperation with each other to transfer the sludge stored in the conditioning tank 10 by the set amount, the operation of the conditioning tank pump 1-2 is stopped, and the related conditioning tank valves 5-1-1, 5-1-2, 5-1-3, and 5-1-4 are closed.

According to the fourth embodiment, an operating logic of continuously treating the sludge by repeating the technical steps described above is provided to improve the digestion efficiency and to minimize an amount of the dehydrated cake in a dehydration process after the digestion process has been performed.

Hereinafter, the operating logic of the organic material thermal hydrolysis system according to the fifth embodiment will be summarized based on the technical constitution described above. The operating logic of the organic material thermal hydrolysis system is configured to include a) measuring weight of sludge discharged from the sludge dehydrating facility, operating the sludge feeding pump in the organic material thermal hydrolysis system, transferring a set amount of sludge into the hopper, and stopping the operation of the sludge feeding pump, b) transferring a set amount of sludge from the hopper into the conditioning tank by using the hopper pump, c) heating the reactor to a set temperature by operating the boiler, maintaining the temperature of the reactor at the set temperature, and maintaining the internal pressure of the reactor at a set pressure while thermally hydrolyzing the sludge of the reactor, d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and simultaneously emptying the lysis tank or flush tank by operating the lysis tank pump or the flush tank pump in order to receive the sludge subject to the thermal hydrolysis reaction made in the reactor, e) closing the reactor pressure reducing valve and allowing the reactor valve to be opened so that the sludge subject to the thermal hydrolysis reaction is transferred into the lysis tank or the flush thank, and closing the reactor valve, and f) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (f). In addition, the operating logic of the organic material thermal hydrolysis system is realized by installing four reactors in parallel between the conditioning tank and the lysis tank or the flush tank, sequentially increasing the temperatures of the reactors to set temperatures and maintaining the temperatures of the reactors at the set temperatures in the state that the steam continuously generated from the combined heat and power generation device is not cooled, thereby efficiently operating the organic material thermal hydrolysis system.

Another operating logic of the organic material thermal hydrolysis system is configured to include (a) measuring weight of sludge discharged from the sludge dehydrating facility, operating the sludge feeding pump in the organic material thermal hydrolysis system, transferring a set amount of sludge into the hopper, and stopping the operation of the sludge feeding pump, (b) heating the temperature of the reactor to a set temperature by operating the boiler and maintaining the temperature of the reactor at the set temperature, and maintaining the internal pressure of the reactor at the set value, while thermally hydrolyzing the sludge, (c) transferring a set amount of the sludge from the hopper to the conditioning tank by using the hopper pump when the boiler is operated, (d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and simultaneously emptying the lysis tank by operating the lysis tank pump in order to receive the sludge subject to the thermal hydrolysis reaction made in the reactor, (e) closing the reactor pressure reducing valve and allowing the reactor valve to be opened so that the sludge subject to the thermal hydrolysis reaction is transferred into the lysis tank, and closing the reactor valve, and (f) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (f) for the organic material thermal hydrolysis. In addition, the operating logic of the organic material thermal hydrolysis system is realized by installing four reactors in parallel between the conditioning tank and the lysis tank or the flush tank, sequentially increasing the temperatures of the reactors to set temperatures and maintaining the temperatures of the reactors at the set temperatures in the state that the steam continuously generated from the combined heat and power generation device is not cooled, thereby efficiently operating the organic material thermal hydrolysis system.

Still another operating logic of the organic material thermal hydrolysis system is configured to include the steps of (a) measuring weight of sludge discharged from the sludge dehydrating facility, operating the sludge feeding pump in the organic material thermal hydrolysis system, transferring a set amount of the discharged sludge into the hopper, and stopping the operation of the sludge feeding pump, (b) transferring a set amount of sludge from the hopper into the conditioning tank by using the hopper pump, (c) heating the temperature of the reactor to a set temperature by operating the boiler and maintaining the temperature of the reactor at the set temperature, and maintaining the internal pressure of the reactor at the set value, while thermally hydrolyzing the sludge, (d) preheating sludge stored in the conditioning tank by transferring steam existing in the reactor for the heating of the conditioning tank as the reactor pressure reducing valve is opened for the efficient use of high-temperature waste energy existing at the upper portion of the reactor, and closing the reactor pressure reducing valve, (e) emptying the lysis tank or the flush tank by operating the lysis tank pump or the flush tank pump in order to receive the sludge subject to the thermal hydrolysis reaction made in the reactor, (f) allowing the reactor valve to be opened to transfer the sludge subject to the thermal hydrolysis reaction into the lysis tank or the flush thank and closing the reactor valve, and (g) allowing the conditioning tank valve to be opened and operating the conditioning tank pump in order to transfer the sludge stored in the conditioning tank into the reactor, so that a set amount of sludge is transferred into the reactor, stopping the operation of the conditioning tank pump, and closing the conditioning tank valve, and to repeatedly perform the steps (a) to (g) for the organic material thermal hydrolysis. In addition, the operating logic of the organic material thermal hydrolysis system is realized by installing four reactors in parallel between the conditioning tank and the lysis tank or the flush tank, sequentially increasing the temperatures of the reactors to set temperatures and maintaining the temperatures of the reactors at the set temperatures in the state that the steam continuously generated from the combined heat and power generation device is not cooled, thereby efficiently operating the organic material thermal hydrolysis system.

As shown in FIG. 5, if the feeding of the steam is terminated in the fourth reactor, the steam is circularly fed to the first reactor, so that the steam can be sequentially and continuously fed.

According to the fourth and fifth embodiments described above, a unit for transferring sludge from the reactor into the lysis tank or flush tank may be configured by using an internal pressure remaining in the reactor after the steam has been used to preheat the conditioning tank or by using an additional transfer pump.

Hereinafter, the operating time points of peripheral valves and pumps shown in FIG. 5 will be described in detail based on the operating logics according to the fourth and fifth embodiments.

Referring to FIG. 5, as described above, the boiler is heated by using the waste heat of the combined heat and power generation, and a plurality of reactors installed in parallel are sequentially heated by using the steam generated as the boiler is heated so that the temperatures of the reactors are increased. The present invention may have a constitution in which the boiler is heated by using additional gas, electricity, or other heating units to continuously generate steam, and the generated steams are sequentially supplied and heated to a plurality of reactors, or a constitution in which a plurality of reactors installed in parallel are sequentially and directly heated so that the temperatures of the reactors are increased. All constitutions are within the scope of the present invention.

The vent valve 5-5 installed at the upper portion of the conditioning tank shown in FIG. 5 is opened after the operation of the sludge feeding pump 1-6 is stopped, and closed after the operation of the hopper pump 1-1 is stopped.

The sludge agitator 8-2 installed in the lysis tank shown in FIG. 5 is operated, the sludge treatment system shown in FIG. 5 is operated, and the operation of the sludge agitator 8-2 is stopped if a set time is elapsed after the operation of the heat exchanger circulation pump 5-9 is stopped.

As shown in FIG. 5, the vent valve 5-7 installed at the upper portion of the lysis tank is opened after the operation of the boiler 14 is stopped according to the first to third embodiments, and is closed if a set time is elapsed after the reactor valve 5-2 is closed.

As shown in FIG. 5, the operation of the agitator 8-1 installed in the conditioning tank is started if a set time is elapsed after the conditioning tank vent valve 5-5 is closed, and the operation of the agitator 8-1 is stopped if a set time is elapsed after the lysis tank vent valve 5-7 is closed.

As shown in FIG. 5, the vent valve 5-6 installed at an upper portion of the reactor is opened if a set time is elapsed after the operation of the lysis tank agitator or the flush tank agitator 8-1 is stopped, and the conditioning tank valve is opened if a set time is elapsed after the related reactor vent valve is opened. The conditioning tank valve 5-1 is opened if a set time is elapsed after the reactor vent valve 5-6 is opened, and the conditioning tank pump 1-2 is operated if a set time is elapsed after the conditioning tank valve 5-1 is opened.

The operation of the conditioning tank pump (1-2) is stopped; the related conditioning tank valve is closed after the set time is elapsed, and the related reactor vent valve is closed if a set time is elapsed after the related conditioning tank valve is closed.

The set time is variously set depending on the type of the sludge, the temperature and the pressure of the reactor, and the capacity of the reactor. The set time may be determined in the range of several seconds to several minutes, but may have a value beyond the range.

The pressure sensor and the temperature sensor are installed in the sludge thermal hydrolysis reactor operated at the high temperature and the high pressure, and in the lysis tank or the flush tank and the conditioning tank operated at the slightly lower temperature, so that the sludge thermal hydrolysis reactor, the lysis tank, the flush tank, and the conditioning tank are operated in cooperation of the feeding valve and/or the boiler at the set temperature and the set pressure.

Each of the tanks and the pipes is provided at one side thereof with various sensors, valves, and pumps fixedly installed thereon and required for the automatic control by the PLC or the micro-computer, so that the tanks and the pipes can operate together.

In addition, a deodorization pipe for removing smell generated from the reactor, an air feeding pipe of the conditioning tank, a cooling water feeding pipe and a boiler water feeding pipe of the heat exchanger may be additionally provided if necessary.

Although the detailed embodiment has been described in that three or four reactors are installed in parallel between the conditioning tank and the lysis tank, at least two or five reactors can be easily applied based on the above description, which is within the scope of the present invention.

### [Industrial Applicability]

According to the present invention, the organic material thermal hydrolysis system employs one or at least two reactors, and is controlled according to the control program based on the operating logic stored in the PLC or the micro-computer to improve digestion efficiency and minimize an amount of a sludge dehydrated cake in a dehydration process after the digestion process has been performed. In addition, the waste heat generated from the reactor is used to preheat the conditioning tank to save the operating energy, and the waste heat, which is continuously generated, can be continuously used, and the sludge treatment time can be greatly reduced. In addition, the present invention has higher industrial applicability.

## Claims

1. An operating logic of an organic material thermal hydrolysis system, the operating logic comprising:
(a) measuring weight of sludge discharged from a sludge dehydrating facility, operating a sludge feeding pump in the organic material thermal hydrolysis system, transferring a set amount of sludge into a hopper, and stopping the operation of the sludge feeding pump;
(b) transferring a set amount of sludge from the hopper into a conditioning tank by using a hopper pump;
(c) heating the reactor to a set temperature by operating a boiler and maintaining a temperature of the reactor at the set temperature and maintaining an internal pressure of the reactor at a set pressure while thermally hydrolyzing the sludge;
(d) preheating sludge stored in the conditioning tank by transferring steam existing in the reactor into the conditioning tank for the heating of the conditioning tank as a reactor pressure reducing valve (5-3) is opened for efficient use of high-temperature waste energy existing at an upper portion of the reactor, and simultaneously emptying a lysis tank by operating a lysis tank pump (1-3) in order to receive sludge subject to a thermal hydrolysis reaction made in the reactor;
(e) closing the reactor pressure reducing valve (5-3) and allowing a reactor valve (5-2) to be opened such that the sludge subject to the thermal hydrolysis reaction is transferred into the lysis tank, and closing the reactor valve (5-2); and
(f) allowing a conditioning tank valve (5-1) to be opened and operating a conditioning tank pump to transfer a set amount of sludge stored in the conditioning tank into the reactor, stopping the operation of the conditioning tank pump, and closing the conditioning tank valve (5-1), wherein steps (a) to (f) are repeatedly performed for an organic material thermal hydrolysis process.

2. An operating logic of an organic material thermal hydrolysis system, the operating logic comprising:
(a) measuring weight of sludge discharged from a dehydrating facility, operating a sludge feeding pump in the organic material thermal hydrolysis system, transferring a set amount of sludge into a hopper, and stopping the operation of the sludge feeding pump;
(b) heating a temperature of a reactor to a set temperature by operating a boiler and maintaining the temperature of the reactor at the set temperature, and maintaining an internal pressure of the reactor at a set value while thermally hydrolyzing sludge;
(c) transferring a set amount of sludge from the hopper to a conditioning tank by using a hopper pump when the boiler is operated;
(d) preheating sludge stored in the conditioning tank by transferring steam existing in the reactor for the heating of the conditioning tank as a reactor pressure reducing valve (5-3) is opened for efficient use of high-temperature waste energy existing at an upper portion of the reactor, and simultaneously emptying a lysis tank by operating a lysis tank pump in order to receive sludge subject to a thermal hydrolysis reaction made in the reactor;
(e) closing the reactor pressure reducing valve (5-3) and allowing a reactor valve (5-2) to be opened such that the sludge subject to the thermal hydrolysis reaction is transferred into the lysis tank, and closing the reactor valve (5-2); and
(f) allowing a conditioning tank valve (5-1) to be opened and operating a conditioning tank pump (1-2) to transfer a set amount of sludge stored in the conditioning tank into the reactor, stopping the operation of the conditioning tank pump, and closing the conditioning tank valve (5-1),
wherein steps (a) to (f) are repeatedly performed for an organic material thermal hydrolysis process.

3. An operating logic of an organic material thermal hydrolysis system, the operating logic comprising:
(a) measuring weight of sludge discharged from a dehydrating facility, operating a sludge feeding pump in the organic material thermal hydrolysis system, transferring a set amount of sludge into a hopper, and stopping the operation of the sludge feeding pump;
(b) transferring a set amount of sludge from the hopper into a conditioning tank by using a hopper pump;
(c) heating a temperature of a reactor to a set temperature by operating a boiler and maintaining the temperature of the reactor at the set temperature, and maintaining an internal pressure of the reactor at a set value while thermally hydrolyzing sludge;
(d) preheating sludge stored in the conditioning tank by transferring steam existing in the reactor for the heating of the conditioning tank as a reactor pressure reducing valve (5-3) is opened for efficient use of high-temperature waste energy existing at an upper portion of the reactor, and closing the reactor pressure reducing valve (5-3);
(e) emptying a lysis tank by operating a lysis tank pump in order to receive sludge subject to a thermal hydrolysis reaction made in the reactor;
(f) allowing a reactor valve (5-2) to be opened to transfer the sludge subject to the thermal hydrolysis reaction into the lysis tank and closing the reactor valve (5-2); and
(g) allowing a conditioning tank valve (5-1) to be opened and operating a conditioning tank pump (1-2) in order to transfer the sludge stored in the conditioning tank into the reactor, so that a set amount of sludge is transferred into the reactor, stopping the operation of the conditioning tank pump, and closing the conditioning tank valve (5-1),
wherein steps (a) to (f) are repeatedly performed for an organic material thermal hydrolysis process.

4. The operating logic of one of claims 1 to 3, wherein a unit to transfer the sludge subject to the thermal hydrolysis reaction in the reactor to the lysis tank uses a remaining pressure in the reactor or comprises an additional transfer pump.

5. The operating logic of one of claims 1 to 3, wherein the sludge discharged from the conditioning tank to the reactor has an amount set in a range of 25% to 60% based on a volume of the reactor.

6. The operating logic of one of claims 1 to 3, wherein a control condition of the reactor includes a temperature set in a range of 150 °C to 200 °C, a pressure set in a range of 6 bar to 12 bar, and a reaction time set in a range of 20 minutes to 60 minutes to improve digestion efficiency by performing the organic material thermal hydrolysis process such that a higher molecule organic material is converted from a lower molecule organic material.

7. The operating logic of one of claims 1 to 3, wherein a load cell is installed under the hopper, the conditioning tank, the reactor, and the lysis tank to measure an amount of injected sludge such that the sludge is injected by weight set in a memory.

8. The operating logic of one of claims 1 to 3, wherein a vent valve (5-5) installed at an upper portion of the conditioning tank is opened after the operation of the sludge feeding pump (1-6) is stopped, and closed after the operation of the hopper pump (1-1) is stopped.

9. The operating logic of one of claims 1 to 3, wherein a sludge agitator (8-2) installed in the lysis tank is operated while an operation of a sludge treatment system is started, and an operation of the sludge agitator is stopped if a set time is elapsed after an operation of a heat exchanger circulation pump (5-9) is stopped.

10. The operating logic of one of claims 1 to 3, wherein a vent valve (5-7) installed at an upper portion of the lysis tank is opened after an operation of a boiler (14) is stopped, and is closed if a set time is elapsed after the reactor valve (5-2) is closed.

11. The operating logic of one of claims 1 to 3, wherein an operation of an agitator (8-1) installed in the conditioning tank is started if a set time is elapsed after a conditioning tank vent valve (5-5) is closed, and stopped if a set time is elapsed after a lysis tank vent valve (5-7) is closed.

12. The operating logic of one of claims 1 to 3, wherein a vent valve (5-6) installed at the upper portion of the reactor is opened if a set time is elapsed after an operation of a lysis tank agitator (8-1) is stopped, the conditioning tank valve (5-1) is opened if a set time is elapsed after the reactor vent valve (5-6) is opened, the conditioning tank valve (5-1) is opened if a set time is elapsed after the reactor vent valve (5-6) is opened, and the conditioning tank pump (1-2) is operated if a set time is elapsed after the conditioning tank valve (5-1) is opened, and
wherein the conditioning tank valve (5-1) is closed if a set time is elapsed after the operation of the conditioning tank pump (1-2) is stopped, and the reactor vent valve (5-6) is closed if a set time is elapsed after the conditioning tank valve (5-1) is closed.

13. An operating logic of an organic material thermal hydrolysis system, the operating logic comprising:
(a) measuring weight of sludge discharged from a sludge dehydrating facility, operating a sludge feeding pump in the organic material thermal hydrolysis system, transferring a set amount of sludge into a hopper, and stopping the operation of the sludge feeding pump;
(b) transferring a set amount of sludge from the hopper into a conditioning tank by using a hopper pump;
(c) heating and maintaining at least two reactors to a set temperature by using steam, which is continuously generated, and maintaining an internal pressure of each reactor at a set pressure while thermally hydrolyzing the sludge;
(d) preheating sludge stored in the conditioning tank by transferring steam existing in each reactor into the conditioning tank for the heating of the conditioning tank as a related reactor pressure reducing valve is opened for efficient use of high-temperature waste energy existing at an upper portion of each reactor, and simultaneously emptying a lysis tank or a flush tank by operating a lysis tank pump or a flush tank pump in order to receive sludge subject to a thermal hydrolysis reaction made in each reactor;
(e) closing the related reactor pressure reducing valve and allowing a related reactor valve to be opened such that the sludge subject to the thermal hydrolysis reaction is transferred into the lysis tank or the flush tank, and closing the related reactor valve ; and
(f) allowing a related conditioning tank valve to be opened and operating a conditioning tank pump to transfer a set amount of sludge stored in the conditioning tank into each reactor, stopping the operation of the conditioning tank pump, and closing the conditioning tank valve,
wherein steps (a) to (f) are repeatedly performed for an organic material thermal hydrolysis process, and
wherein the at least two reactors are installed in parallel between the conditioning tank and the lysis tank or the flush tank, and sequentially and continuously heated and maintained by using the steam continuously generated.

14. An operating logic of an organic material thermal hydrolysis system, the operating logic comprising:
(a) measuring weight of sludge discharged from a dehydrating facility, operating a sludge feeding pump in the organic material thermal hydrolysis system, transferring a set amount of sludge into a hopper, and stopping the operation of the sludge feeding pump;
(b) heating a temperature of a reactor to a set temperature by operating a boiler and maintaining the temperature of the reactor at the set temperature, and maintaining an internal pressure of the reactor at a set value while thermally hydrolyzing sludge;
(c) transferring a set amount of sludge from the hopper into a conditioning tank by using a hopper pump when the boiler is operated;
(d) preheating sludge stored in the conditioning tank by transferring steam existing in the reactor into the conditioning tank for the heating of the conditioning tank as a reactor pressure reducing valve is opened for efficient use of high-temperature waste energy existing at an upper portion of the reactor, and simultaneously emptying a lysis tank or a flush tank by operating a lysis tank pump or a flush tank pump in order to receive sludge subject to a thermal hydrolysis reaction made in the reactor;
(e) closing the reactor pressure reducing valve and allowing a reactor valve to be opened such that the sludge subject to the thermal hydrolysis reaction is transferred into the lysis tank, and closing the reactor valve; and
(f) allowing a conditioning tank valve to be opened and operating a conditioning tank pump to transfer a set amount of sludge stored in the conditioning tank into the reactor, stopping the operation of the conditioning tank pump, and closing the conditioning tank valve,
wherein steps (a) to (f) are repeatedly performed for an organic material thermal hydrolysis process, and
wherein at least two reactors are installed in parallel between the conditioning tank and the lysis tank or the flush tank, and sequentially and continuously heated and maintained by using the steam continuously generated.

15. An operating logic of an organic material thermal hydrolysis system, the operating logic comprising:
(a) measuring weight of sludge discharged from a dehydrating facility, operating a sludge feeding pump in the organic material thermal hydrolysis system, transferring a set amount of sludge into a hopper, and stopping the operation of the sludge feeding pump;
(b) transferring a set amount of sludge from the hopper into a conditioning tank by using a hopper pump;
(c) heating a temperature of a reactor to a set temperature by operating a boiler and maintaining the temperature of the reactor at the set temperature, and maintaining an internal pressure of the reactor at a set value while thermally hydrolyzing sludge;
(d) preheating sludge stored in the conditioning tank by transferring steam existing in the reactor for the heating of the conditioning tank as a reactor pressure reducing valve (5-3) is opened for efficient use of high-temperature waste energy existing at an upper portion of the reactor, and closing the reactor pressure reducing valve ;
(e) simultaneously emptying a lysis tank or a flush tank by operating a lysis tank pump or a flush tank pump in order to receive sludge subject to a thermal hydrolysis reaction made in the reactor;
(f) allowing a reactor valve to be opened to transfer the sludge subject to the thermal hydrolysis reaction to the lysis tank or the flush tank, and closing the reactor valve; and
(g) allowing a conditioning tank valve to be opened and operating a conditioning tank pump to transfer a set amount of sludge stored in the conditioning tank into the reactor, stopping the operation of the conditioning tank pump, and closing the conditioning tank valve,
wherein steps (a) to (f) are repeatedly performed for an organic material thermal hydrolysis process, and
wherein at least two reactors are installed in parallel between the conditioning tank and the lysis tank or the flush tank, and sequentially and continuously heated and maintained by using the steam continuously generated.

16. The operating logic of one of claims 13 to 15, further comprising heating the boiler by using waste heat generated from a combined heat and power generation device to heat the reactor to the set temperature and to maintain the reactor at the set temperature for the organic material thermal hydrolysis process in the organic material thermal hydrolysis system, and heating the reactor by using the generated steam.

17. The operating logic of one of claims 13 to 15, wherein two to six reactors are installed in parallel between the conditioning tank and the lysis tank or the flush tank in the organic material thermal hydrolysis system.

18. The operating logic of claim 17, wherein, when the two to six reactors are installed in parallel between the conditioning tank and the lysis tank in the organic material thermal hydrolysis system, a time to increase temperatures of the reactors is preferably set in a range of 20 minutes to 60 minutes, and a sum of a time to transfer the sludge from the conditioning tank to each reactor, a time to transfer the sludge from each reactor to the lysis tank, and a reaction time is set in a range of 60 minutes to 120 minutes.

19. The operating logic of one of claims 13 to 15, wherein a pipe to transfer the sludge is installed between the conditioning tank and each reactor, and provided at one side thereof with a valve to cut off or transfer the sludge, and a pipe to transfer the sludge is installed between each reactor and the lysis tank or the flush tank, and provided at one side thereof with a valve to cut off or transfer the sludge.

20. The operating logic of one of claims 13 to 15, wherein a unit to transfer the sludge subject to the thermal hydrolysis reaction in the reactor to the lysis tank or the flush tank uses a remaining pressure in the reactor or comprises an additional transfer pump.

21. The operating logic of one of claims 13 to 15, wherein the sludge discharged from the conditioning tank to the reactor has an amount set in a range of 25% to 60% based on a volume of the reactor.

22. The operating logic of one of claims 13 to 15, wherein a control condition of the reactor includes a temperature set in a range of 150 °C to 200 °C and a pressure set in a range of 6 bar to 12 bar to improve digestion efficiency by performing the organic material thermal hydrolysis process such that a higher molecule organic material is converted from a lower molecule organic material.

23. The operating logic of one of claims 13 to 15, wherein a load cell is installed under the hopper, the conditioning tank, the reactor, and the lysis tank or the flush tank to measure an amount of injected sludge such that the sludge is injected by weight set in a memory.

24. The operating logic of one of claims 13 to 15, wherein a vent valve (5-5) installed at an upper portion of the conditioning tank is opened after the operation of the sludge feeding pump (1-6) is stopped, and closed after the operation of the hopper pump (1-1) is stopped.

25. The operating logic of one of claims 13 to 15, wherein a sludge agitator (8-2) installed in the lysis tank or the flush tank is operated while an operation of a sludge treatment system is started, and an operation of the sludge agitator (8-2) is stopped if a set time is elapsed after an operation of a heat exchanger circulation pump (5-9) is stopped.

26. The operating logic of one of claims 13 to 15, wherein a vent valve (5-7) installed at an upper portion of the lysis tank or the flush tank is opened after an operation of a boiler (14) is stopped, and is closed if a set time is elapsed after the related reactor valve is closed.

27. The operating logic of one of claims 13 to 15, wherein an operation of an agitator (8-1) installed in the conditioning tank is started if a set time is elapsed after a conditioning tank vent valve (5-5) is closed, and stopped if a set time is elapsed after a lysis tank vent valve or a flush tank vent valve (5-7) is closed.

28. The operating logic of one of claims 13 to 115, wherein each vent valve installed at the upper portion of each reactor is opened if a set time is elapsed after an operation of a lysis tank agitator or a flush tank agitator (8-1) is stopped, the conditioning tank valve is opened if a set time is elapsed after each reactor vent valve is opened, the conditioning tank valve is opened if a set time is elapsed after each reactor vent valve is opened, and the conditioning tank pump (1-2) is operated if a set time is elapsed after the conditioning tank valve is opened, and
wherein the conditioning tank valve is closed if a set time is elapsed after the operation of the conditioning tank pump (1-2) is stopped, and each reactor vent valve is closed if a set time is elapsed after the conditioning tank valve is closed.

29. The operating logic of claim 17, wherein a pipe to feed the steam from the boiler is installed between the boiler and each of the at least two reactors to heat each of the at least two, and provided at one side thereof with a steam feeding valve.
